(19)

Europäisches
Patentamt

European
Patent Office

Office européen
des brevets

(11) **EP 4 694 491 A1**

(12) **EUROPEAN PATENT APPLICATION**
published in accordance with Art. 153(4) EPC

(43) Date of publication:
**11.02.2026 Bulletin 2026/07**

(21) Application number: **24785294.0**

(22) Date of filing: **05.04.2024**

(51) International Patent Classification (IPC):
**H04W 72/232** *(2023.01)* **H04W 72/1268** *(2023.01)*
**H04L 1/00** *(2006.01)* **H04L 27/26** *(2006.01)*

(52) Cooperative Patent Classification (CPC):
**H04L 1/00; H04L 27/26; H04W 72/1268;
H04W 72/232**

(86) International application number:
**PCT/KR2024/004479**

(87) International publication number:
**WO 2024/210594 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.04.2023 KR 20230045288**

(71) Applicant: **LG ELECTRONICS, INC.**
**Seoul 07336 (KR)**

(72) Inventors:
• **BAN, Choongsang**
**Seoul 06772 (KR)**
• **SHIN, Seokmin**
**Seoul 06772 (KR)**
• **KO, Hyunsoo**
**Seoul 06772 (KR)**
• **BAE, Duckhyun**
**Seoul 06772 (KR)**

(74) Representative: **Plasseraud IP**
**104 Rue de Richelieu**
**CS92104**
**75080 Paris Cedex 02 (FR)**

(54) **METHOD AND APPARATUS FOR TRANSMITTING AND RECEIVING UPLINK CHANNEL IN WIRELESS COMMUNICATION SYSTEM**

(57) A method according to an embodiment of the present disclosure includes receiving configuration information related to a Physical Uplink Shared CHannel (PUSCH), receiving Downlink Control Information (DCI) including a New Data Indicator (NDI) field, and transmitting the PUSCH based on the DCI. Based on a parameter related to a presence of a transform precoder indicator field in the DCI being configured based on the configuration information, the transform precoder indicator field is based on 1 bit. A value of the 1 bit indicates that a transform precoder is enabled or disabled. Based on i) a Cyclic Redundancy Check (CRC) related to the DCI being scrambled by a Configured Scheduling (CS)-Radio Network Temporary Identifier (RNTI) and ii) a value of the NDI field being '0': the 1 bit is reserved.

[FIG. 2]

```
                    ┌─────────┐
                    │  Start  │
                    └────┬────┘
                         │
   ┌─────────────────────────────────────────────────┐
   │ Receive configuration information related to PUSCH│──── S210
   └─────────────────────┬───────────────────────────┘
                         │
   ┌─────────────────────────────────────────────────┐
   │         Receive DCI including NDI field          │──── S220
   └─────────────────────┬───────────────────────────┘
                         │
   ┌─────────────────────────────────────────────────┐
   │          Transmit PUSCH based on DCI             │──── S230
   └─────────────────────┬───────────────────────────┘
                         │
                    ┌────┴────┐
                    │   End   │
                    └─────────┘
```

EP 4 694 491 A1

**Description**

[TECHNICAL FIELD]

The present disclosure relates to a method and device for transmitting and receiving an uplink channel in a wireless communication system.

[BACKGROUND ART]

Mobile communication systems have been developed to provide a voice service while ensuring the activity of a user. However, in the mobile communication system, not only a voice, but also a data service is extended. At present, there is a shortage of resources due to an explosive increase in traffic, and users demand a higher speed service. As a result, a more advanced mobile communication system is required.

Requirements for a next-generation mobile communication system should be able to support the acceptance of explosive data traffic, a dramatic increase in the per-user data rate, the acceptance of a significant increase in the number of connected devices, very low end-to-end latency, and high-energy efficiency. To this end, various technologies are researched, which include dual connectivity, massive multiple input multiple output (MIMO), in-band full duplex, non-orthogonal multiple access (NOMA), super wideband support, device networking, and the like.

On the other hand, according to an existing operation, a UL waveform is configured semi-statically. The UL waveform may vary based on whether transform precoding is applied/whether the transform precoding is enabled. Hereinafter, this will be specifically described.

1) When the transform precoding is applied (that is, when the transform precoding is enabled), the waveform is based on Discrete Fourier Transform-spreading-Orthogonal Frequency Division Multiplexing (DFT-s-OFDM).

2) When the transform precoding is not applied (that is, when the transform precoding is disabled), the waveform is based on Cyclic Prefix-Orthogonal Frequency Division Multiplexing (CP-OFDM).

Whether the transform precoding is enabled is configured/indicated semi-statically.

For example, whether the transform precoding is enabled may be determined based on an RRC parameter. i) When a transformPrecoder parameter is configured based on PUSCH-config, whether the transform precoding is enabled may be determined based on the transformPrecoder parameter. ii) When the transformPrecoder parameter is not configured, whether the transform precoding is enabled may be determined based on an msg3-transformPrecoder parameter.

According to Rel-18 coverage enhancement, dynamic waveform switching (DWS) operations related to the above-described UL waveform are supported. A field (e.g., a transform precoder indicator) related to the DWS has been introduced to DCI format (0_1/0_2). The transform precoder indicator field may be applied to a dynamic grant (DG) PUSCH and a configured grant (CG) PUSCH.

The DG PUSCH is scheduled by C-RNTI-based DCI. The (Type 2) CG PUSCH is activated by CS-RNTI-based DCI. According to DCI size alignment, a bit width of a field within a C-RNTI-based DCI format is assumed to be equal to a bit width of the same field within a CS-RNTI-based DCI format.

[DISCLOSURE]

[TECHNICAL PROBLEM]

When dynamic waveform switching (DWS) is enabled by an RRC parameter (i.e., when an RRC parameter representing the presence of a transform precoder indicator field within a DCI format is set), a transform precoder indicator field (1 bit) is present in the DCI format.

Even if CRC related to a DCI format is scrambled by a different RNTI (e.g., C-RNTI or CS-RNTI), transform precoder indicator fields with the same bit width are present in the DCI format due to the RRC parameter and DCI size alignment. However, the corresponding fields need to be interpreted differently for DG PUSCH and CG PUSCH, which are based on different scheduling methods.

An object of the present disclosure is to propose a method of interpreting/applying a field related to whether to enable transform precoding present in a DCI format based on an uplink scheduling method (e.g., dynamic grant or configured-grant).

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

[TECHNICAL SOLUTION]

A method performed by a user equipment (UE) according to an embodiment of the present disclosure comprises receiving configuration information related to a Physical Uplink Shared CHannel (PUSCH), receiving Downlink Control Information (DCI) including a New Data Indicator (NDI) field, and transmitting the PUSCH based on the DCI.

Based on a parameter related to a presence of a transform precoder indicator field in the DCI being configured based on the configuration information, the transform precoder indicator field is based on 1 bit.

A value of the 1 bit indicates that a transform precoder is enabled or disabled.

Based on i) a Cyclic Redundancy Check (CRC) related to the DCI being scrambled by a Configured Scheduling (CS)-Radio Network Temporary Identifier (RNTI) and ii) a value of the NDI field being '0': the 1 bit is reserved.

Based on the parameter being not configured, the transform precoder indicator field may be based on 0 bit.

A grant related to the PUSCH may be a dynamic grant or a configured grant.

A DCI format related to the DCI may be DCI format 0_1 or DCI format 0_2.

The CRC may be scrambled by the CS-RNTI, a cell (C)-RNTI, a semi-persistent (SP)-channel state information (CSI)-RNTI, or a modulation coding scheme (MCS)-C-RNTI.

Based on i) the CRC being scrambled by the CS-RNTI, and ii) the value of the NDI field being '1': a transform precoding for the PUSCH may be enabled or disabled based on the transform precoder indicator field.

The transmission of the PUSCH may be based on a PUSCH retransmission.

Parameters in the configuration information excluding at least one parameter may be applied to the PUSCH retransmission. The at least one parameter may include transformPrecoder parameter.

Based on the CRC being scrambled by the C-RNTI or the MCS-C-RNTI: a transform precoding for the PUSCH may be enabled or disabled based on the transform precoder indicator field.

For the same serving cell, a bit width of a first field in the DCI format 0_1 or the DCI format 0_2 based on the CS-RNTI may be equal to a bit width of the same field in the DCI format 0_1 or the DCI format 0_2 based on the C-RNTI.

The first field may be the transform precoder indicator field.

Based on a payload size of a DCI format related to the DCI being less than a defined value, zeros may be appended to the DCI format until the payload size equals the defined value.

Based on i) the CRC being scrambled by the CS-RNTI, and ii) the value of the NDI field being '0': a validation of the DCI may be performed for scheduling activation based on a configured grant.

The validation of the DCI may be achieved based on fields in the DCI.

A user equipment (UE) according to another embodiment of the present disclosure comprises one or more transceivers, one or more processors, and one or more memories connected to the one or more processors and configured to store instructions.

The instructions, based on being executed by the one or more processors, configure the one or more processors to perform all steps of any one of the methods.

A device according to another embodiment of the present disclosure comprises one or more memories and one or more processors operably connected to the one or more memories.

The one or more memories are configured to store instructions based on being executed by the one or more processors, and the instructions are configured to allow the one or more processors to perform all steps of any one of the methods.

One or more non-transitory computer readable mediums according to another embodiment of the present disclosure stores instructions. The instructions executable by one or more processors are configured to allow the one or more processors to perform all steps of any one of the methods.

A method performed by a base station according to another embodiment of the present disclosure comprises transmitting configuration information related to a Physical Uplink Shared CHannel (PUSCH), transmitting Downlink Control Information (DCI) including a New Data Indicator (NDI) field, and receiving the PUSCH based on the DCI.

Based on a parameter related to a presence of a transform precoder indicator field in the DCI being configured based on the configuration information, the transform precoder indicator field is based on 1 bit.

A value of the 1 bit indicates that a transform precoder is enabled or disabled.

Based on i) a Cyclic Redundancy Check (CRC) related to the DCI being scrambled by a Configured Scheduling (CS)-Radio Network Temporary Identifier (RNTI) and ii) a value of the NDI field being '0': the 1 bit is reserved.

A base station according to another embodiment of the present disclosure comprises one or more transceivers, one or more processors, and one or more memories connected to the one or more processors and storing instructions.

The instructions configure the one or more processors to perform all steps of the methods based on being executed by the one or more processors.

[ADVANTAGEOUS EFFECTS]

According to embodiments of the present disclosure, when a transform precoder indicator field of the same bit width is present in DCI with CRC scrambled based on a different RNTI (e.g., CS-RNTI, C-RNTI), it is clearly defined how the field should be interpreted. Therefore, ambiguity regarding whether to apply transform precoding of DG PUSCH/CG PUSCH can be prevented.

Further, it is clearly defined that there are cases where the transform precoder indicator field is present in the DCI but the operation according to the interpretation of the field is not applied (e.g., when the CG PUSCH is activated (= the value of NDI field is 0), the operation according to the field indication is not applied). Dynamic waveform switching is not applied to all cases where the transform precoder indicator field is present in the DCI, but may be limitedly applied to specific cases where the dynamic waveform switching is required. For example, in the case of retransmission of the CG PUSCH (when the value of the NDI field is 1), the operation according to the indication of the transform precoder indicator field may be applied. Therefore, latency due to the waveform switching can be minimized by limiting cases where the waveform switching is unnecessarily performed.

In addition, the effectiveness of the dynamic waveform switching operation introduced to utilize a waveform more suitable for a channel environment can be secured.

Effects that could be achieved with the present disclosure are not limited to those that have been described hereinabove merely by way of example, and other effects and advantages of the present disclosure will be more clearly understood from the following description by a person skilled in the art to which the present disclosure pertains.

[BRIEF DESCRIPTION OF THE DRAWINGS]

FIG. 1 illustrates an example of an uplink transmission/reception operation.
FIG. 2 is a flowchart illustrating a method performed by a user equipment according to an embodiment of the present disclosure.
FIG. 3 is a flowchart illustrating a method performed by a base station according to another embodiment of the present disclosure.
FIG. 4 illustrates configurations of a first device and a second device according to an embodiment of the present disclosure.

[DETAILED DESCRIPTION]

Reference will now be made in detail to embodiments of the present disclosure, examples of which are illustrated in the accompanying drawings. A detailed description to be disclosed below together with the accompanying drawing is to describe exemplary embodiments of the present disclosure and not to describe a unique embodiment for carrying out the present disclosure. The detailed description below includes details to provide a complete understanding of the present disclosure. However, those skilled in the art know that the present disclosure may be carried out without the details.

In some cases, in order to prevent a concept of the present disclosure from being ambiguous, known structures and devices may be omitted or illustrated in a block diagram format based on core functions of each structure and device.

Hereinafter, downlink (DL) means communication from the base station to the terminal and uplink (UL) means communication from the terminal to the base station. In downlink, a transmitter may be part of the base station, and a receiver may be part of the terminal. In uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

Uplink Channel Structure

The UE transmits a related signal to the base station through an uplink channel to be described below and the base station receives the related signal from the UE through the uplink channel to be described below.

(1) Physical Uplink Shared Channel (PUSCH)

The PUSCH transports uplink data (e.g., UL-shared channel transport block (UL-SCH TB) and/or uplink control information (UCI) and is transmitted based on a Cyclic Prefix - Orthogonal Frequency Division Multiplexing (CP-OFDM) waveform or a Discrete Fourier Transform - spread - Orthogonal Frequency Division Multiplexing (DFT-s-OFDM) waveform. When the PUSCH is transmitted based on the DFT-s-OFDM waveform, the UE transmits the PUSCH by applying transform precoding. As an example, when the transform precoding is disable (e.g., transform precoding is disabled), the UE transmits the PUSCH based on the CP-OFDM waveform, and when the transform precoding is enabled (e.g., transform precoding is enabled), the UE may transmit the PUSCH based on the CP-OFDM waveform or the DFT-s-OFDM waveform. PUSCH transmission is dynamically scheduled by the UL grant in the DCI or semi-statically scheduled based on higher layer (e.g., RRC) signaling (and/or Layer 1 (L1) signaling (e.g., PDCCH)) (configured grant). The PUSCH transmission may be performed based on a codebook or a non-codebook.

(2) Physical Uplink Control Channel (PUCCH)

The PUCCH transports uplink control information, HARQ-ACK, and/or scheduling request (SR), and is divided into Short PUCCH and Long PUCCH according to a PUCCH transmission length. Table 1 shows PUCCH formats.

[Table 1]

| PUCCH format | Length in OFDM symbols $N_{symb}^{PUCCH}$ | Number of bits | Usage | Etc |
|---|---|---|---|---|
| 0 | 1-2 | $\leq 2$ | HARQ, SR | Sequence selection |
| 1 | 4-14 | $\leq 2$ | HARQ, [SR] | Sequence modulation |
| 2 | 1-2 | $> 2$ | HARQ, CSI, [SR] | CP-OFDM |
| 3 | 4-14 | $> 2$ | HARQ, CSI, [SR] | DFT-s-OFDM (no UE multiplexing) |
| 4 | 4-14 | $> 2$ | HARQ, CSI, [SR] | DFT-s-OFDM (Pre DFT OCC) |

PUCCH format 0 transports UCI with a maximum size of 2 bits and is mapped and transmitted based on a sequence. Specifically, the UE transmits specific UCI to the base station by transmitting one of a plurality of sequences through the PUCCH which is PUCCH format 0. The UE transmits the PUCCH which is PUCCH format 0 within a PUCCH resource for configuring a corresponding SR only when transmitting a positive SR.

PUCCH format 1 transports the UCI having the maximum size of 2 bits and the modulation signal is spread by an orthogonal cover code (OCC) (configured differently depending on whether frequency hopping is made) in the time domain. The DMRS is transmitted in a symbol in which the modulation symbol is not transmitted (that is, time division multiplexed (TDMed) and transmitted).

PUCCH format 2 transports UCI having a bit size larger than 2 bits and the modulation symbol is frequency division multiplexed (FDMed) with the DMRS and transmitted. The DM-RS is located in symbol indexes #1, #4, #7, and #10 within a resource block given with a density of 1/3. A pseudo noise (PN) sequence is used for a DM_RS sequence. The frequency hopping may be activated for 2 symbol PUCCH format 2.

PUCCH format 3 is not subjected to UE-multiplexing within the same physical resource blocks, and transports UCI with a bit size larger than 2 bits. In other words the PUCCH resource of PUCCH format 3 does not include the orthogonal cover code. The modulation symbol time division multiplexed (TDMed) with the DMRS and transmitted.

PUCCH format 4 supports multiplexing of up to 4 UEs in the same physical resource blocks, and transports the UCI with the bit size larger than 2 bits. In other words the PUCCH resource of PUCCH format 3 includes the orthogonal cover code. The modulation symbol is time division multiplexed (TDMed) with the DMRS and transmitted.

Uplink Transmission/Reception Operation

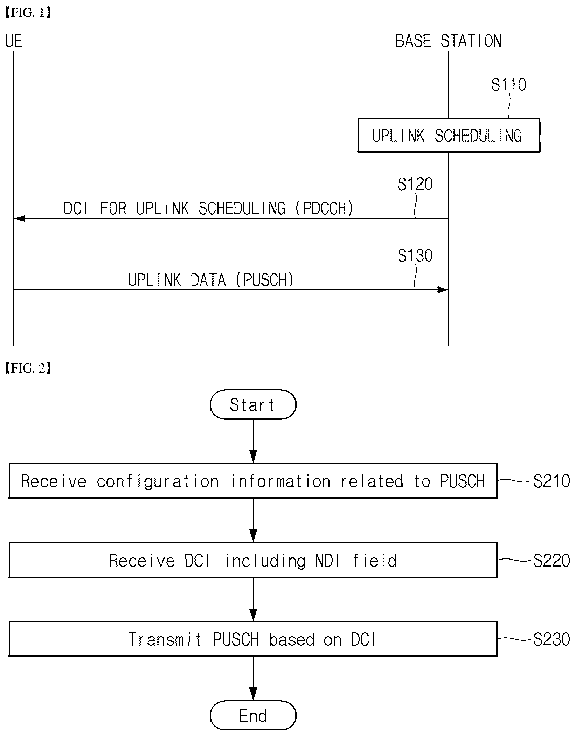

FIG. 1 illustrates an example of an uplink transmission and reception operation. Referring to the FIG. 1, the eNB may schedule uplink transmission such as the frequency/time resource, the transport layer, an uplink precoder, the MCS, etc., (S110). In particular, the eNB may determine a beam for PUSCH transmission of the UE through the beam management operations described above. And, the UE may receive, from the eNB, DCI for uplink scheduling (i.e.,

including scheduling information of the PUSCH) on the PDCCH (S120).

DCI format 0_0 or 0_1 may be used for the uplink scheduling and in particular, DCI format 0_1 may include information such as the following examples: Identifier for DCI formats, UL/Supplementary uplink (SUL) indicator, Bandwidth part indicator, Frequency domain resource assignment, Time domain resource assignment, Frequency hopping flag, Modulation and coding scheme (MCS), SRS resource indicator (SRI), Precoding information and number of layers, Antenna port(s), SRS request, DMRS sequence initialization, and Uplink Shared Channel (UL-SCH) indicator.

In particular, configured SRS resources in an SRS resource set associated with higher layer parameter "usage" may be indicated by an SRS resource indicator field. Further, "spatialRelationInfo" may be configured for each SRS resource and a value of "spatialRelationInfo" may be one of {CRI, SSB, and SRI}.

In addition, the UE may transmit the uplink data to the eNB on the PUSCH (S130). When the UE detects a PDCCH including DCI format 0_0 or 0_1, the UE may transmit the corresponding PUSCH according to the indication by the corresponding DCI. two schemes(Codebook based transmission scheme and non-codebook based transmission scheme) are supported for PUSCH transmission.

In the case of the codebook based transmission, when higher layer parameter txConfig" is set to "codebook", the UE is configured to the codebook based transmission. On the contrary, when higher layer parameter txConfig" is set to "nonCodebook", the UE is configured to the non-codebook based transmission. When higher layer parameter "txConfig" is not configured, the UE does not predict that the PUSCH is scheduled by DCI format 0_1. When the PUSCH is scheduled by DCI format 0_0, the PUSCH transmission is based on a single antenna port. In the case of the codebook based transmission, the PUSCH may be scheduled by DCI format 0_0, DCI format 0_1, or semi-statically. When the PUSCH is scheduled by DCI format 0_1, the UE determines a PUSCH transmission precoder based on the SRI, the Transmit Precoding Matrix Indicator (TPMI), and the transmission rank from the DCI as given by the SRS resource indicator and the Precoding information and number of layers field. The TPMI is used for indicating a precoder to be applied over the antenna port and when multiple SRS resources are configured, the TPMI corresponds to the SRS resource selected by the SRI. Alternatively, when the single SRS resource is configured, the TPMI is used for indicating the precoder to be applied over the antenna port and corresponds to the corresponding single SRS resource. A transmission precoder is selected from an uplink codebook having the same antenna port number as higher layer parameter "nrofSRS-Ports". When the UE is set to higher layer parameter "txConfig" set to "codebook", at least one SRS resource is configured in the UE. An SRI indicated in slot n is associated with most recent transmission of the SRS resource identified by the SRI and here, the SRS resource precedes PDCCH (i.e., slot n) carrying the SRI.

In the case of the non-codebook based transmission, the PUSCH may be scheduled by DCI format 0_0, DCI format 0_1, or semi-statically. When multiple SRS resources are configured, the UE may determine the PUSCH precoder and the transmission rank based on a wideband SRI and here, the SRI is given by the SRS resource indicator in the DCI or given by higher layer parameter "srs-ResourceIndicator". The UE may use one or multiple SRS resources for SRS transmission and here, the number of SRS resources may be configured for simultaneous transmission in the same RB based on the UE capability. Only one SRS port is configured for each SRS resource. Only one SRS resource may be configured to higher layer parameter "usage" set to "nonCodebook". The maximum number of SRS resources which may be configured for non-codebook based uplink transmission is 4. The SRI indicated in slot n is associated with most recent transmission of the SRS resource identified by the SRI and here, the SRS transmission precedes PDCCH (i.e., slot n) carrying the SRI.

Transform Precoder field

Hereinafter, a configuration related to the transform precoder which may be applied to embodiments to be described below will be described.

[Table 2]

*RACH-ConfigCommon*

The IE *RACH-ConfigCommon* is used to specify the cell specific random-access parameters.

**RACH-ConfigCommon information element**

```
-- ASN1START
-- TAG-RACH-CONFIGCOMMON-START

RACH-ConfigCommon ::=          SEQUENCE {
    rach-ConfigGeneric          RACH-ConfigGeneric,
    totalNumberOfRA-Preambles    INTEGER (1..63)
OPTIONAL,    -- Need S
    ssb-perRACH-OccasionAndCB-PreamblesPerSSB    CHOICE {
        oneEighth                         ENUMERATED
{n4,n8,n12,n16,n20,n24,n28,n32,n36,n40,n44,n48,n52,n56,n60,n64},
        oneFourth                         ENUMERATED
{n4,n8,n12,n16,n20,n24,n28,n32,n36,n40,n44,n48,n52,n56,n60,n64},
        oneHalf                           ENUMERATED
{n4,n8,n12,n16,n20,n24,n28,n32,n36,n40,n44,n48,n52,n56,n60,n64},
        one                               ENUMERATED
{n4,n8,n12,n16,n20,n24,n28,n32,n36,n40,n44,n48,n52,n56,n60,n64},
        two                               ENUMERATED {n4,n8,n12,n16,n20,n24,n28,n32},
        four                              INTEGER (1..16),
        eight                             INTEGER (1..8),
        sixteen                           INTEGER (1..4)
    }
OPTIONAL,    -- Need M

    groupBconfigured          SEQUENCE {
        ra-Msg3SizeGroupA                 ENUMERATED {b56, b144, b208, b256, b282, b480, b640,
                                          b800, b1000, b72, spare6, spare5,spare4, spare3, spare2,
spare1},
        messagePowerOffsetGroupB          ENUMERATED { minusinfinity, dB0, dB5, dB8, dB10, dB12,
dB15, dB18},
        numberOfRA-PreamblesGroupA        INTEGER (1..64)
    }
```

```
OPTIONAL,    -- Need R
    ra-ContentionResolutionTimer          ENUMERATED { sf8, sf16, sf24, sf32, sf40, sf48, sf56, sf64},
    rsrp-ThresholdSSB                     RSRP-Range
OPTIONAL,    -- Need R
```

```
rsrp-ThresholdSSB-SUL                 RSRP-Range
OPTIONAL,    -- Cond SUL
    prach-RootSequenceIndex               CHOICE {
        l839                                  INTEGER (0..837),
        l139                                  INTEGER (0..137)
    },
    msg1-SubcarrierSpacing                SubcarrierSpacing
OPTIONAL,    -- Cond L139
    restrictedSetConfig                   ENUMERATED {unrestrictedSet, restrictedSetTypeA,
restrictedSetTypeB},
    msg3-transformPrecoder                ENUMERATED {enabled}
OPTIONAL,    -- Need R

    ...,
    [[
    ra-PrioritizationForAccessIdentity-r16   SEQUENCE {
        ra-Prioritization-r16                 RA-Prioritization,
        ra-PrioritizationForAI-r16            BIT STRING (SIZE (2))
    }
OPTIONAL,    -- Cond InitialBWP-Only
    prach-RootSequenceIndex-r16           CHOICE {
        l571                                  INTEGER (0..569),
        l1151                                 INTEGER (0..1149)
    }   OPTIONAL    -- Need R
    ]],
    [[
    ra-PrioritizationForSlicing-r17       RA-PrioritizationForSlicing-r17
OPTIONAL,    -- Cond InitialBWP-Only
    featureCombinationPreambles-r17 SEQUENCE (SIZE(1..maxFeatureCombPreambles-FFS-r17)) OF
FeatureCombinationPreambles-r17 OPTIONAL -- Need R
    ]]
-- Editor's Note: FFS where to implement CE-specific RACH-related parameters, e.g.
numberOfMsg3Repetitions, mcs-Msg3Repetition, is pending to RA partitioning conclusion on the structure
}


AdditionalRACH-ConfigCommon-r17 ::= SEQUENCE {
    rach-ConfigCommon-r17                 RACH-ConfigCommon
OPTIONAL,    -- Need R
    msgA-ConfigCommon-r17                 MsgA-ConfigCommon-r16
OPTIONAL,    -- Cond R

    ...
}
```

| RACH-ConfigCommon field descriptions |
|---|
| **featureCombinationPreambles** |
| Specifies a series of preamble partitions each associated to a combination of features and 4-step RA. |
| **messagePowerOffsetGroupB** |
| Threshold for preamble selection. Value is in dB. Value *minusinfinity* corresponds to –infinity. Value *dB0* corresponds to 0 dB, *dB5* corresponds to 5 dB and so on. (see TS 38.321 [3], clause 5.1.2) |
| **msg1-SubcarrierSpacing** |
| Subcarrier spacing of PRACH (see TS 38.211 [16], clause 5.3.2).<br>Only the following values are applicable depending on the used frequency:<br>FR1:     15 or 30 kHz<br>FR2-1:   60 or 120 kHz<br>FR2-2:   120, 480, or 960 kHz<br>If absent, the UE applies the SCS as derived from the *prach-ConfigurationIndex* in *RACH-ConfigGeneric* (see tables Table 6.3.3.1-1, Table 6.3.3.1-2, Table 6.3.3.2-2 and Table 6.3.3.2-3, TS 38.211 [16]). The value also applies to contention free random access (*RACH-ConfigDedicated*), to SI-request and to contention-based beam failure recovery (CB-BFR). But it does not apply for contention free beam failure recovery (CF-BFR) (see *BeamFailureRecoveryConfig*). |
| **msg3-transformPrecoder** |
| Enables the transform precoder for Msg3 transmission according to clause 6.1.3 of TS 38.214 [19]. If the field is absent, the UE disables the transformer precoder (see TS 38.213 [13], clause 8.3). |
| **numberOfRA-PreamblesGroupA** |
| The number of CB preambles per SSB in group A. This determines implicitly the number of CB preambles per SSB available in group B. (see TS 38.321 [3], clause 5.1.1). The setting should be consistent with the setting of *ssb-perRACH-OccasionAndCB-PreamblesPerSSB*. |
| **prach-RootSequenceIndex** |
| PRACH root sequence index (see TS 38.211 [16], clause 6.3.3.1). The value range depends on whether L=839 or L=139 or L=571 or L=1151. The length of the root sequence corresponding with the index indicated in this IE should be consistent with the one indicated in *prach-ConfigurationIndex* in the *RACH-ConfigDedicated* (if configured). If *prach-RootSequenceIndex-r16* is signalled, UE shall ignore the *prach-RootSequenceIndex* (without suffix).<br>For FR2-2, only the following values are applicable depending on the used subcarrier spacing:<br>120 kHz:  L=139, L=571, and L=1151<br>480 kHz:  L=139, and L=571<br>960 kHz:  L=139 |
| **ra-ContentionResolutionTimer** |
| The initial value for the contention resolution timer (see TS 38.321 [3], clause 5.1.5). Value *sf8* corresponds to 8 subframes, value *sf16* corresponds to 16 subframes, and so on. |
| **ra-Msg3SizeGroupA** |
| Transport Blocks size threshold in bits below which the UE shall use a contention-based RA preamble of group A. (see TS 38.321 [3], clause 5.1.2). |
| **ra-Prioritization** |
| Parameters which apply for prioritized random access procedure on any UL BWP of SpCell for specific Access Identities (see TS 38.321 [3], clause 5.1.1a). |

| |
|---|
| *ra-PrioritizationForAI* |
| Indicates whether the field *ra-Prioritization-r16* applies for Access Identities. The first/leftmost bit corresponds to Access Identity 1, the next bit corresponds to Access Identity 2. Value 1 indicates that the field *ra-Prioritization-r16* applies otherwise the field does not apply (see TS 23.501 [32]). |
| *rach-ConfigGeneric* |
| RACH parameters for both regular random access and beam failure recovery. |
| *restrictedSetConfig* |
| Configuration of an unrestricted set or one of two types of restricted sets, see TS 38.211 [16], clause 6.3.3.1. |
| *rsrp-ThresholdSSB* |
| UE may select the SS block and corresponding PRACH resource for path-loss estimation and (re)transmission based on SS blocks that satisfy the threshold (see TS 38.213 [13]). |
| *rsrp-ThresholdSSB-SUL* |
| The UE selects SUL carrier to perform random access based on this threshold (see TS 38.321 [3], clause 5.1.1). The value applies to all the BWPs. |
| *ssb-perRACH-OccasionAndCB-PreamblesPerSSB* |
| The meaning of this field is twofold: the CHOICE conveys the information about the number of SSBs per RACH occasion. Value *oneEighth* corresponds to one SSB associated with 8 RACH occasions, value *oneFourth* corresponds to one SSB associated with 4 RACH occasions, and so on. The ENUMERATED part indicates the number of Contention Based preambles per SSB. Value *n4* corresponds to 4 Contention Based preambles per SSB, value *n8* corresponds to 8 Contention Based preambles per SSB, and so on. The total number of CB preambles in a RACH occasion is given by *CB-preambles-per-SSB* * max(1, *SSB-per-rach-occasion*). See TS 38.213 [13]. |
| *totalNumberOfRA-Preambles* |
| Total number of preambles used for contention based and contention free 4-step or 2-step random access in the RACH resources defined in *RACH-ConfigCommon*, excluding preambles used for other purposes (e.g. for SI request). If the field is absent, all 64 preambles are available for RA. The setting should be consistent with the setting of *ssb-perRACH-OccasionAndCB-PreamblesPerSSB*, i.e. it should be a multiple of the number of SSBs per RACH occasion. |

Referring to Table 2, RACH-ConfigCommon includes an msg3-transformPrecoder parameter.

[Table 3]

*MsgA-PUSCH-Config*

The IE *MsgA-PUSCH-Config* is used to specify the PUSCH allocation for MsgA in 2-step random access type procedure.

**MsgA-PUSCH-Config information element**

-- ASN1START
-- TAG-MSGA-PUSCH-CONFIG-START

MsgA-PUSCH-Config-r16 ::=                    SEQUENCE {
    msgA-PUSCH-ResourceGroupA-r16                    MsgA-PUSCH-Resource-r16
OPTIONAL, -- Cond InitialBWPConfig
    msgA-PUSCH-ResourceGroupB-r16                    MsgA-PUSCH-Resource-r16
OPTIONAL, -- Cond GroupBConfigured

```
          msgA-TransformPrecoder-r16              ENUMERATED {enabled, disabled}
OPTIONAL, -- Need R
          msgA-DataScramblingIndex-r16            INTEGER (0..1023)
OPTIONAL, -- Need S
          msgA-DeltaPreamble-r16                  INTEGER (-1..6)
OPTIONAL   -- Need R
}


MsgA-PUSCH-Resource-r16 ::=                        SEQUENCE {
          msgA-MCS-r16                             INTEGER (0..15),
          nrofSlotsMsgA-PUSCH-r16                  INTEGER (1..4),
          nrofMsgA-PO-PerSlot-r16                  ENUMERATED {one, two, three, six},
          msgA-PUSCH-TimeDomainOffset-r16             INTEGER (1..32),
          msgA-PUSCH-TimeDomainAllocation-r16         INTEGER (1..maxNrofUL-Allocations)
OPTIONAL, -- Need S
          startSymbolAndLengthMsgA-PO-r16          INTEGER (0..127)
OPTIONAL, -- Need S
          mappingTypeMsgA-PUSCH-r16                ENUMERATED {typeA, typeB}
OPTIONAL, -- Need S
          guardPeriodMsgA-PUSCH-r16                INTEGER (0..3)
OPTIONAL, -- Need R
          guardBandMsgA-PUSCH-r16                  INTEGER (0..1),
          frequencyStartMsgA-PUSCH-r16            INTEGER (0..maxNrofPhysicalResourceBlocks-1),
          nrofPRBs-PerMsgA-PO-r16                  INTEGER (1..32),
          nrofMsgA-PO-FDM-r16                      ENUMERATED {one, two, four, eight},
          msgA-IntraSlotFrequencyHopping-r16       ENUMERATED {enabled}
OPTIONAL, -- Need R
          msgA-HoppingBits-r16                     BIT STRING (SIZE(2))
```

```
OPTIONAL, -- Cond FreqHopConfigured
          msgA-DMRS-Config-r16                     MsgA-DMRS-Config-r16,
          nrofDMRS-Sequences-r16                   INTEGER (1..2),
          msgA-Alpha-r16                           ENUMERATED {alpha0, alpha04, alpha05, alpha06,
                                                      alpha07, alpha08, alpha09, alpha1}
OPTIONAL, -- Need S
          interlaceIndexFirstPO-MsgA-PUSCH-r16     INTEGER (1..10)
OPTIONAL, -- Need R
          nrofInterlacesPerMsgA-PO-r16             INTEGER (1..10)
OPTIONAL, -- Need R
          ...
}


MsgA-DMRS-Config-r16 ::=                           SEQUENCE {
          msgA-DMRS-AdditionalPosition-r16            ENUMERATED {pos0, pos1, pos3}
OPTIONAL, -- Need S
          msgA-MaxLength-r16                       ENUMERATED {len2}
```

```
OPTIONAL, -- Need S
    msgA-PUSCH-DMRS-CDM-Group-r16              INTEGER (0..1)
OPTIONAL, -- Need S
    msgA-PUSCH-NrofPorts-r16                   INTEGER (0..1)
OPTIONAL, -- Need S
    msgA-ScramblingID0-r16                     INTEGER (0..65535)
OPTIONAL, -- Need S
    msgA-ScramblingID1-r16                     INTEGER (0..65535)
OPTIONAL   -- Need S
}
```

| |
|---|
| **msgA-DataScramblingIndex** |
| Identifier used to initiate data scrambling (c_init) for msgA PUSCH. If the field is absent the UE applies the value Physical cell ID (*physCellID*). |
| **msgA-DeltaPreamble** |
| Power offset of msgA PUSCH relative to the preamble received target power. Actual value = field value * 2 [dB] (see TS 38.213 [13], clause 7.1). |
| **msgA-PUSCH-ResourceGroupA** |
| MsgA PUSCH resources that the UE shall use when performing MsgA transmission using preambles group A. If field is not configured for the selected UL BWP, the UE shall use the MsgA PUSCH configuration for group A of initial UL BWP. |
| **msgA-PUSCH-ResourceGroupB** |
| MsgA PUSCH resources that the UE shall use when performing MsgA transmission using preambles group B. |
| **msgA-TransformPrecoder** |
| Enables or disables the transform precoder for MsgA transmission (see clause 6.1.3 of TS 38.214 [19]). |

| *MsgA-PUSCH-Resource* **field descriptions** |
|---|
| **guardBandMsgA-PUSCH** |
| PRB-level guard band between FDMed PUSCH occasions (see TS 38.213 [13], clause 8.1A). If interlaced PUSCH is configured, value 0 is applied. |
| **guardPeriodMsgA-PUSCH** |
| Guard period between PUSCH occasions in the unit of symbols (see TS 38.213 [13], clause 8.1A). |
| **frequencyStartMsgA-PUSCH** |
| Offset of lowest PUSCH occasion in frequency domain with respect to PRB 0 (see TS 38.213 [13], clause 8.1A). |
| **interlaceIndexFirstPO-MsgA-PUSCH** |
| Interlace index of the first PUSCH occasion in frequency domain if interlaced PUSCH is configured. For 30kHz SCS only the integers 1, 2, 3, 4, 5 are applicable (see TS 38.213 [13], clause 8.1A). |
| **mappingTypeMsgA-PUSCH** |
| PUSCH mapping type A or B. If the field is absent, the UE shall use the parameter *msgA-PUSCH-TimeDomainAllocation* (see TS 38.213 [13], clause 8.1A). |
| **msgA-Alpha** |
| Dedicated alpha value for MsgA PUSCH. If the field is absent, the UE shall use the value of *msg3-Alpha* if configured, else UE applies value 1 (see TS 38.213 [13], clause 7.1.1). |

| | |
|---|---|
| ***msgA-DMRS-Config*** <br> DMRS configuration for msgA PUSCH (see TS 38.213 [13], clause 8.1A and TS 38.214 [19] clause 6.2.2). | |
| ***msgA-HoppingBits*** <br> Value of hopping bits to indicate which frequency offset to be used for second hop. See Table 8.3-1 in TS 38.213 [13]. | |
| ***msgA-IntraSlotFrequencyHopping*** <br> Intra-slot frequency hopping per PUSCH occasion (see TS 38.213 [13], clause 8.1A). | |
| ***msgA-MCS*** <br> Indicates the MCS index for msgA PUSCH from the Table 6.1.4.1-1 for DFT-s-OFDM and Table 5.1.3.1-1 for CP-OFDM in TS 38.214 [19]. | |

| |
|---|
| ***msgA-PUSCH-TimeDomainAllocation*** |
| Indicates a combination of start symbol and length and PUSCH mapping type from the TDRA table (*PUSCH-TimeDomainResourceAllocationList* if provided in *PUSCH-ConfigCommon*, or else the default Table 6.1.2.1.1-2 in 38.214 [19] is used if *pusch-TimeDomainAllocationList* is not provided in PUSCH-ConfigCommon). The parameter K2 in the table is not used for msgA PUSCH. The network configures one of *msgA-PUSCH-TimeDomainAllocation* and *startSymbolAndLengthMsgA-PO*, but not both. If the field is absent, the UE shall use the value of startSymbolAndLenghtMsgA-PO. |
| ***msgA-PUSCH-TimeDomainOffset*** |
| A single time offset with respect to the start of each PRACH slot (with at least one valid RO), counted as the number of slots (based on the numerology of active UL BWP). See TS 38.213 [13], clause 8.1A. |
| ***nrofDMRS-Sequences*** |
| Number of DMRS sequences for MsgA PUSCH for CP-OFDM. In case of single PUSCH configuration or if the DMRS symbols of multiple configurations are not overlapped, if the DMRS resources configured in one PUSCH occasion is no larger than 8 (for *len2*) or 4 (for *len1*), then only DMRS port is configured. |
| ***nrofInterlacesPerMsgA-PO*** |
| Number of consecutive interlaces per PUSCH occasion if interlaced PUSCH is configured. For 30kHz SCS only the integers 1, 2, 3, 4, 5 are applicable (see TS 38.213 [13], clause 8.1A). |
| ***nrofMsgA-PO-FDM*** |
| The number of msgA PUSCH occasions FDMed in one time instance (see TS 38.213 [13], clause 8.1A). |
| ***nrofMsgA-PO-PerSlot*** |
| Number of time domain PUSCH occasions in each slot. PUSCH occasions including guard period are contiguous in time domain within a slot (see TS 38.213 [13], clause 8.1A). |
| ***nrofPRBs-PerMsgA-PO*** |
| Number of PRBs per PUSCH occasion (see TS 38.213 [13], clause 8.1A). |
| ***nrofSlotsMsgA-PUSCH*** |
| Number of slots (in active UL BWP numerology) containing one or multiple PUSCH occasions, each slot has the same time domain resource allocation (see TS 38.213 [13], clause 8.1A). |
| ***startSymbolAndLengthMsgA-PO*** |
| An index giving valid combinations of start symbol, length and mapping type as start and length indicator (SLIV) for the first msgA PUSCH occasion, for RRC_CONNECTED UEs in non-initial BWP as described in TS 38.214 [19] clause 6.1.2. The network configures the field so that the allocation does not cross the slot boundary. The number of occupied symbols excludes the guard period. If the field is |

| |
|---|
| absent, the UE shall use the value in *msgA-PUSCH-TimeDomainAllocation* (see TS 38.213 [13], clause 8.1A). The network configures one of *msgA-PUSCH-TimeDomainAllocation* and *startSymbolAndLengthMsgA-PO*, but not both. If the field is absent, the UE shall use the value of *msgA-PUSCH-TimeDomainAllocation*. |

15

| *MsgA-DMRS-Config* field descriptions |
|---|
| **msgA-DMRS-AdditionalPosition**<br><br>Indicates the position for additional DM-RS. If the field is absent, the UE applies value *pos2*. |
| **msgA-MaxLength**<br><br>indicates single-symbol or double-symbol DMRS. If the field is absent, the UE applies value *len1*. |
| **msgA-PUSCH-DMRS-CDM-Group**<br><br>1-bit indication of indices of CDM group(s). If the field is absent, then both CDM groups are used. |
| **msgA-PUSCH-NrofPorts**<br><br>0 indicates 1 port per CDM group, 1 indicates 2 ports per CDM group. If the field is absent then 4 ports per CDM group are used (see TS 38.213 [13], clause 8.1A). |
| **msgA-ScramblingID0**<br><br>UL DMRS scrambling initialization for CP-OFDM. If the field is absent the UE applies the value Physical cell ID (*physCellID*). |
| **msgA-ScramblingID1**<br><br>UL DMRS scrambling initialization for CP-OFDM. If the field is absent the UE applies the value Physical cell ID (*physCellID*). |

Referring to Table 3, MsgA-PUSCH-Config includes an msgA-TransformPrecoder parameter.

[Table 4]

*PUSCH-Config*

The IE *PUSCH-Config* is used to configure the UE specific PUSCH parameters applicable to a particular BWP.

*PUSCH-Config* information element

```
-- ASN1START
-- TAG-PUSCH-CONFIG-START

PUSCH-Config ::=                    SEQUENCE {
    dataScramblingIdentityPUSCH         INTEGER (0..1023)
OPTIONAL,    -- Need S
    txConfig                            ENUMERATED {codebook, nonCodebook}
OPTIONAL,    -- Need S
    dmrs-UplinkForPUSCH-MappingTypeA        SetupRelease { DMRS-UplinkConfig }
OPTIONAL,    -- Need M
    dmrs-UplinkForPUSCH-MappingTypeB        SetupRelease { DMRS-UplinkConfig }
OPTIONAL,    -- Need M
    pusch-PowerControl                  PUSCH-PowerControl
OPTIONAL,    -- Need M
    frequencyHopping                    ENUMERATED {intraSlot, interSlot}
OPTIONAL,    -- Need S
```

```
        frequencyHoppingOffsetLists         SEQUENCE (SIZE (1..4)) OF INTEGER (1..
maxNrofPhysicalResourceBlocks-1)


OPTIONAL,    -- Need M
        resourceAllocation                 ENUMERATED { resourceAllocationType0,
resourceAllocationType1, dynamicSwitch},
        pusch-TimeDomainAllocationList       SetupRelease { PUSCH-TimeDomainResourceAllocationList
}            OPTIONAL,    -- Need M
        pusch-AggregationFactor            ENUMERATED { n2, n4, n8 }
OPTIONAL,    -- Need S
        mcs-Table                          ENUMERATED {qam256, qam64LowSE}
OPTIONAL,    -- Need S
        mcs-TableTransformPrecoder          ENUMERATED {qam256, qam64LowSE}
OPTIONAL,    -- Need S
        transformPrecoder                  ENUMERATED {enabled, disabled}
OPTIONAL,    -- Need S
        codebookSubset                      ENUMERATED {fullyAndPartialAndNonCoherent,
partialAndNonCoherent,nonCoherent}


OPTIONAL, -- Cond codebookBased
        maxRank                            INTEGER (1..4)
OPTIONAL, -- Cond codebookBased
        rbg-Size                           ENUMERATED { config2}
```

```
OPTIONAL, -- Need S
        uci-OnPUSCH                        SetupRelease { UCI-OnPUSCH}
OPTIONAL, -- Need M
        tp-pi2BPSK                         ENUMERATED {enabled}
OPTIONAL, -- Need S

        ...,
        [[
        minimumSchedulingOffsetK2-r16        SetupRelease { MinSchedulingOffsetK2-Values-r16 }
OPTIONAL,    -- Need M
        ul-AccessConfigListDCI-0-1-r16      SetupRelease { UL-AccessConfigListDCI-0-1-r16 }
OPTIONAL,    -- Need M
        -- Start of the parameters for DCI format 0_2 introduced in V16.1.0
        harq-ProcessNumberSizeDCI-0-2-r16               INTEGER (0..4)
OPTIONAL,    -- Need R
        dmrs-SequenceInitializationDCI-0-2-r16          ENUMERATED {enabled}
OPTIONAL,    -- Need S
        numberOfBitsForRV-DCI-0-2-r16                   INTEGER (0..2)
OPTIONAL,    -- Need R
        antennaPortsFieldPresenceDCI-0-2-r16            ENUMERATED {enabled}
OPTIONAL,    -- Need S
        dmrs-UplinkForPUSCH-MappingTypeA-DCI-0-2-r16        SetupRelease { DMRS-UplinkConfig }
OPTIONAL,    -- Need M
```

```
        dmrs-UplinkForPUSCH-MappingTypeB-DCI-0-2-r16          SetupRelease { DMRS-UplinkConfig }
OPTIONAL,   -- Need M
    frequencyHoppingDCI-0-2-r16                          CHOICE {
        pusch-RepTypeA                                       ENUMERATED {intraSlot, interSlot},
        pusch-RepTypeB                                       ENUMERATED {interRepetition,
interSlot}
    }
OPTIONAL,   -- Need S
    frequencyHoppingOffsetListsDCI-0-2-r16   SetupRelease { FrequencyHoppingOffsetListsDCI-0-2-r16}
OPTIONAL,   -- Need M
    codebookSubsetDCI-0-2-r16               ENUMERATED {fullyAndPartialAndNonCoherent,
partialAndNonCoherent,nonCoherent}

OPTIONAL,   -- Cond codebookBased
    invalidSymbolPatternIndicatorDCI-0-2-r16             ENUMERATED {enabled}
OPTIONAL,   -- Need S
    maxRankDCI-0-2-r16                                   INTEGER (1..4)
OPTIONAL,   -- Cond codebookBased
    mcs-TableDCI-0-2-r16                                 ENUMERATED {qam256, qam64LowSE}
OPTIONAL,   -- Need S
    mcs-TableTransformPrecoderDCI-0-2-r16                 ENUMERATED {qam256, qam64LowSE}
OPTIONAL,   -- Need S
    priorityIndicatorDCI-0-2-r16                         ENUMERATED {enabled}
OPTIONAL,   -- Need S
    pusch-RepTypeIndicatorDCI-0-2-r16                    ENUMERATED { pusch-RepTypeA, pusch-
RepTypeB}   OPTIONAL,   -- Need R
```

```
resourceAllocationDCI-0-2-r16                       ENUMERATED { resourceAllocationType0,
resourceAllocationType1, dynamicSwitch}

OPTIONAL,   -- Need M
    resourceAllocationType1GranularityDCI-0-2-r16       ENUMERATED { n2,n4,n8,n16 }
OPTIONAL,   -- Need S
    uci-OnPUSCH-ListDCI-0-2-r16                          SetupRelease { UCI-OnPUSCH-ListDCI-0-
2-r16}   OPTIONAL,   -- Need M
    pusch-TimeDomainAllocationListDCI-0-2-r16            SetupRelease { PUSCH-
TimeDomainResourceAllocationList-r16 }

OPTIONAL,   -- Need M
    -- End of the parameters for DCI format 0_2 introduced in V16.1.0
pusch-TimeDomainAllocationListDCI-0-1-r16            SetupRelease { PUSCH-
TimeDomainResourceAllocationList-r16 }

OPTIONAL,   -- Need M
    invalidSymbolPatternIndicatorDCI-0-1-r16            ENUMERATED {enabled}
OPTIONAL,   -- Need S
```

```
        priorityIndicatorDCI-0-1-r16                    ENUMERATED {enabled}
OPTIONAL,    -- Need S
        pusch-RepTypeIndicatorDCI-0-1-r16                       ENUMERATED { pusch-RepTypeA, pusch-
RepTypeB}          OPTIONAL,    -- Need R
        frequencyHoppingDCI-0-1-r16                     ENUMERATED {interRepetition, interSlot}
OPTIONAL,    -- Cond RepTypeB
        uci-OnPUSCH-ListDCI-0-1-r16                     SetupRelease { UCI-OnPUSCH-ListDCI-0-1-r16  }
OPTIONAL,    -- Need M
invalidSymbolPattern-r16                 InvalidSymbolPattern-r16
OPTIONAL,    -- Need S
        pusch-PowerControl-v1610                  SetupRelease {PUSCH-PowerControl-v1610}
OPTIONAL,    -- Need M
        ul-FullPowerTransmission-r16              ENUMERATED {fullpower, fullpowerMode1,
fullpowerMode2}          OPTIONAL,    -- Need R
        pusch-TimeDomainAllocationListForMultiPUSCH-r16   SetupRelease { PUSCH-
TimeDomainResourceAllocationList-r16 }


OPTIONAL,   --   Need M
        numberOfInvalidSymbolsForDL-UL-Switching-r16          INTEGER (1..4)
OPTIONAL     -- Cond RepTypeB2
        ]],
        [[
        ul-AccessConfigListDCI-0-2-r17          SetupRelease { UL-AccessConfigListDCI-0-2-r17 }
OPTIONAL,    -- Need M
        betaOffsetsCrossPri0-r17                 SetupRelease { BetaOffsetsCrossPriSel-r17 }
OPTIONAL,    -- Need M
        betaOffsetsCrossPri1-r17                 SetupRelease { BetaOffsetsCrossPriSel-r17 }
OPTIONAL,    -- Need M
```

```
betaOffsetsCrossPri0DCI-0-2-r17         SetupRelease { BetaOffsetsCrossPriSelDCI-0-2-r17 }
OPTIONAL,    -- Need M
        betaOffsetsCrossPri1DCI-0-2-r17         SetupRelease { BetaOffsetsCrossPriSelDCI-0-2-r17 }
OPTIONAL,    -- Need M
        mappingPattern-r17                  ENUMERATED {cyclicMapping, sequentialMapping}
OPTIONAL,    -- Need R
        secondTPCFieldDCI-0-1-r17               ENUMERATED {enabled}
OPTIONAL,    -- Need R
        secondTPCFieldDCI-0-2-r17               ENUMERATED {enabled}
OPTIONAL,    -- Need R
        sequenceOffsetForRV-r17            INTEGER (0..3)
OPTIONAL,    -- Need R
        pusch-TimeDomainAllocationListForMultiPUSCH-r17   SetupRelease { PUSCH-
TimeDomainResourceAllocationList-r17 }


OPTIONAL,   --   Need M
        pusch-TimeDomainAllocationListDCI-0-2-r17          SetupRelease { PUSCH-
```

```
TimeDomainResourceAllocationList-r17 }


OPTIONAL, -- Need M
    pusch-TimeDomainAllocationListDCI-0-1-r17        SetupRelease { PUSCH-
TimeDomainResourceAllocationList-r17 }


OPTIONAL, -- Need M
    ul-AccessConfigListDCI-0-1-r17            SetupRelease { UL-AccessConfigListDCI-0-1-r17 }
OPTIONAL, -- Need M
    minimumSchedulingOffsetK2-r17            SetupRelease { MinSchedulingOffsetK2-Values-r17 }
OPTIONAL, -- Need M
    availableSlotCounting-r17            ENUMERATED { enabled }
OPTIONAL, -- Need S
    dmrs-BundlingPUSCH-Config-r17            SetupRelease { DMRS-BundlingPUSCH-Config-r17 }
OPTIONAL, -- Need M
    harq-ProcessNumberSizeDCI-0-2-v1700        INTEGER (5)
OPTIONAL, -- Need R
    harq-ProcessNumberSizeDCI-0-1-r17        INTEGER (5)
OPTIONAL    -- Need R
    ]]
dynamicTransformPrecoderFieldPresenceDCI-0-1-r18    ENUMERATED {enabled}
OPTIONAL, -- Need R
    dynamicTransformPrecoderFieldPresenceDCI-0-2-r18    ENUMERATED {enabled}
OPTIONAL, -- Need R
}
UCI-OnPUSCH ::=                SEQUENCE {
    betaOffsets                CHOICE {
        dynamic                SEQUENCE (SIZE (4)) OF BetaOffsets,
        semiStatic            BetaOffsets
    }
OPTIONAL, -- Need M
    scaling                ENUMERATED { f0p5, f0p65, f0p8, f1 }
}
MinSchedulingOffsetK2-Values-r16 ::=    SEQUENCE (SIZE
```

```
(1..maxNrOfMinSchedulingOffsetValues-r16)) OF INTEGER (0..maxK2-SchedulingOffset-r16)


MinSchedulingOffsetK2-Values-r17 ::=    SEQUENCE (SIZE (1..maxNrOfMinSchedulingOffsetValues-
r16)) OF INTEGER (0..maxK2-SchedulingOffset-r17)


UCI-OnPUSCH-DCI-0-2-r16 ::=            SEQUENCE {
    betaOffsetsDCI-0-2-r16            CHOICE {
        dynamicDCI-0-2-r16                CHOICE {
            oneBit-r16                SEQUENCE (SIZE (2)) OF BetaOffsets,
            twoBits-r16                SEQUENCE (SIZE (4)) OF BetaOffsets
        },
```

| *PUSCH-Config* field descriptions |
|---|
| ***antennaPortsFieldPresenceDCI-0-2*** <br><br> Configure the presence of "Antenna ports" field in DCI format 0_2. When the field is configured, then the "Antenna ports" field is present in DCI format 0_2. Otherwise, the field size is set to 0 for DCI format 0_2 (See TS 38.212 [17], clause 7.3.1.1.3). If neither *dmrs-UplinkForPUSCH-MappingTypeA-DCI-0-2* nor *dmrs-UplinkForPUSCH-MappingTypeB-DCI-0-2* is configured, this field is absent. |
| ***availableSlotCounting*** <br><br> Indicate whether PUSCH repetitions counted on the basis of available slots is enabled. If the field is absent, PUSCH repetitions counted on the basis of available slots is disabled. |

```
        semiStaticDCI-0-2-r16          BetaOffsets
    }
OPTIONAL,    -- Need M
    scalingDCI-0-2-r16               ENUMERATED { f0p5, f0p65, f0p8, f1 }
}


FrequencyHoppingOffsetListsDCI-0-2-r16 ::=   SEQUENCE (SIZE (1..4)) OF INTEGER (1..
maxNrofPhysicalResourceBlocks-1)


UCI-OnPUSCH-ListDCI-0-2-r16 ::=   SEQUENCE (SIZE (1..2)) OF UCI-OnPUSCH-DCI-0-2-r16


UCI-OnPUSCH-ListDCI-0-1-r16 ::=   SEQUENCE (SIZE (1..2)) OF UCI-OnPUSCH


UL-AccessConfigListDCI-0-1-r16 ::= SEQUENCE (SIZE (1..64)) OF INTEGER (0..63)


UL-AccessConfigListDCI-0-1-r17 ::= SEQUENCE (SIZE (1..3)) OF INTEGER (0..2)


UL-AccessConfigListDCI-0-2-r17 ::= SEQUENCE (SIZE (1..64)) OF INTEGER (0..63)


BetaOffsetsCrossPriSel-r17 ::= CHOICE {
    dynamic-r17            SEQUENCE (SIZE (4)) OF BetaOffsetsCrossPri-r17,
    semiStatic-r17             BetaOffsetsCrossPri-r17
}


BetaOffsetsCrossPriSelDCI-0-2-r17 ::= CHOICE {
    dynamicDCI-0-2-r17         CHOICE {
        oneBit-r17                 SEQUENCE (SIZE (2)) OF BetaOffsetsCrossPri-r17,
        twoBits-r17                SEQUENCE (SIZE (4)) OF BetaOffsetsCrossPri-r17
    },
    semiStaticDCI-0-2-r17    BetaOffsetsCrossPri-r17
}
```

| |
|---|
| ***betaOffsetsCrossPri0, betaOffsetsCrossPri1, betaOffsetsCrossPri0DCI-0-2, betaOffsetsCrossPri1DCI-0-2***<br><br>Selection between and configuration of dynamic and semi-static beta-offset for multiplexing HARQ-ACK on dynamically scheduled PUSCH with different priorities, see TS 38.213 [13], clause 9.3.<br>The field *betaOffsetsCrossPrio0* indicates multiplexing low priority (LP) HARQ-ACK on dynamically scheduled high priority (HP) PUSCH.<br>The field *betaOffsetsCrossPrio1* indicates multiplexing HP HARQ-ACK on dynamically scheduled LP PUSCH.<br>The field *betaOffsetsCrossPrio0DCI-0-2* indicates multiplexing LP HARQ-ACK on dynamically scheduled HP PUSCH by DCI format 0_2.<br>The field *betaOffsetsCrossPrio1DCI-0-2* indicates multiplexing HP HARQ-ACK on dynamically scheduled LP PUSCH by DCI format 0_2. |
| ***codebookSubset, codebookSubsetDCI-0-2***<br><br>Subset of PMIs addressed by TPMI, where PMIs are those supported by UEs with maximum coherence capabilities (see TS 38.214 [19], clause 6.1.1.1). The field *codebookSubset* applies to DCI format 0_1 and the field *codebookSubsetDCI-0-2* applies to DCI format 0_2 (see TS 38.214 [19], clause 6.1.1.1). |
| ***dataScramblingIdentityPUSCH***<br><br>Identifier used to initialise data scrambling (c_init) for PUSCH. If the field is absent, the UE applies the physical cell ID. (see TS 38.211 [16], clause 6.3.1.1). |
| ***dmrs-BundlingPUSCH-Config***<br><br>Configure the parameters for DMRS bundling for PUSCH (see TS 38.214 [19], clause 6.1.7). |
| ***dmrs-SequenceInitializationDCI-0-2***<br><br>Configure whether the field "DMRS Sequence Initialization" is present or not in DCI format 0_2. If the field is absent, then 0 bit for the field "DMRS Sequence Initialization" in DCI format 0_2. If the field is present, then the number of bits is determined in the same way as DCI format 0_1 (see TS 38.212 [17], clause 7.3.1). |
| ***dmrs-UplinkForPUSCH-MappingTypeA, dmrs-UplinkForPUSCH-MappingTypeA-DCI-0-2***<br><br>DMRS configuration for PUSCH transmissions using PUSCH mapping type A (chosen dynamically via *PUSCH-TimeDomainResourceAllocation*). Only the fields *dmrs-Type, dmrs-AdditionalPosition* and *maxLength* may be set differently for mapping type A and B. The field *dmrs-UplinkForPUSCH-MappingTypeA* applies to DCI format 0_1 and the field *dmrs-UplinkForPUSCH-MappingTypeA-DCI-0-2* applies to DCI format 0_2 (see TS 38.212 [17], clause 7.3.1). |

| |
|---|
| ***dmrs-UplinkForPUSCH-MappingTypeB, dmrs-UplinkForPUSCH-MappingTypeB-DCI-0-2*** <br><br> DMRS configuration for PUSCH transmissions using PUSCH mapping type B (chosen dynamically via *PUSCH-TimeDomainResourceAllocation*). Only the fields *dmrs-Type*, *dmrs-AdditionalPosition* and *maxLength* may be set differently for mapping type A and B. The field *dmrs-UplinkForPUSCH-MappingTypeB* applies to DCI format 0_1 and the field *dmrs-UplinkForPUSCH-MappingTypeB-DCI-0-2* applies to DCI format 0_2 (see TS 38.212 [17], clause 7.3.1). |
| ***frequencyHopping*** <br><br> The value *intraSlot* enables 'Intra-slot frequency hopping' and the value *interSlot* enables 'Inter-slot frequency hopping'. If the field is absent, frequency hopping is not configured for 'pusch-RepTypeA' (see TS 38.214 [19], clause 6.3). The field *frequencyHopping* applies to DCI format 0_0 and 0_1 for 'pusch-RepTypeA'. |

**frequencyHoppingDCI-0-1**

Indicates the frequency hopping scheme for DCI format 0_1 when *pusch-RepTypeIndicatorDCI-0-1* is set to 'pusch-RepTypeB', The value *interRepetition* enables 'Inter-repetition frequency hopping', and the value *interSlot* enables 'Inter-slot frequency hopping'. If the field is absent, frequency hopping is not configured for DCI format 0_1 (see TS 38.214 [19], clause 6.1).

**frequencyHoppingDCI-0-2**

Indicate the frequency hopping scheme for DCI format 0_2. The value *intraSlot* enables 'intra-slot frequency hopping', and the value *interRepetition* enables 'Inter-repetition frequency hopping', and the value *interSlot* enables 'Inter-slot frequency hopping'. When *pusch-RepTypeIndicatorDCI-0-2* is set to '*pusch-RepTypeA*', the frequency hopping scheme can be chosen between 'intra-slot frequency hopping and 'inter-slot frequency hopping' if enabled. When *pusch-RepTypeIndicatorDCI-0-2* is set to '*pusch-RepTypeB*', the frequency hopping scheme can be chosen between 'inter-repetition frequency hopping' and 'inter-slot frequency hopping' if enabled. If the field is absent, frequency hopping is not configured for DCI format 0_2 for 'pusch-RepTypeB' (see TS 38.214 [19], clause 6.3).

**frequencyHoppingOffsetLists, frequencyHoppingOffsetListsDCI-0-2**

Set of frequency hopping offsets used when frequency hopping is enabled for granted transmission (not msg3) and type 2 configured grant activation (see TS 38.214 [19], clause 6.3). The field *frequencyHoppingOffsetLists* applies to DCI format 0_0 and DCI format 0_1 and the field *frequencyHoppingOffsetListsDCI-0-2* applies to DCI format 0_2 (see TS 38.214 [19], clause 6.3).

**harq-ProcessNumberSizeDCI-0-2**

Configure the number of bits for the field "HARQ process number" in DCI format 0_2 (see TS 38.212 [17], clause 7.3.1).

**invalidSymbolPattern**

Indicates one pattern for invalid symbols for PUSCH transmission repetition type B applicable to both DCI format 0_1 and 0_2. If *InvalidSymbolPattern* is not configured, semi-static flexible symbols are used for PUSCH. Segmentation occurs only around semi-static DL symbols (see TS 38.214 [19] clause 6.1).

**invalidSymbolPatternIndicatorDCI-0-1, invalidSymbolPatternIndicatorDCI-0-2**

Indicates the presence of an additional bit in the DCI format 0_1/0_2. If *invalidSymbolPattern* is absent, then both *invalidSymbolPatternIndicatorDCI-0-1* and *invalidSymbolPatternIndicatorDCI-0-2* are absent. The field *invalidSymbolPatternIndicatorDCI-0-1* applies to the DCI format 0_1 and the field *invalidSymbolPatternIndicatorDCI-0-2* applies to DCI format 0_2 (see TS 38.214 [19] clause 6.1). If the field is absent, the UE behaviour is specified in TS 38.214 [19], clause 6.1.2.1.

**dynamicTransformPrecoderFieldPresenceDCI-0-1**

Configure the presence of "Dynamic Transform Precoder" field in DCI format 0_1. When the field is configured, then the "Dynamic Transform Precoder" field is present in DCI format 0_1. Otherwise, the field size is set to 0 for DCI format 0_1 (See TS 38.212 [17]).

**dynamicTransformPrecoderFieldPresenceDCI-0-2**

Configure the presence of "Dynamic Transform Precoder" field in DCI format 0_2. When the field is configured, then the "Dynamic Transform Precoder" field is present in DCI format 0_2. Otherwise, the field size is set to 0 for DCI format 0_2 (See TS 38.212 [17]).

| *mappingPattern* |
| Indicates whether the UE should follow Cyclical mapping pattern or Sequential mapping pattern for |
| when two SRS resource sets are configured for PUSCH transmission and the PUSCH transmission |

| |
|---|
| occasions are associated with both SRS resource sets. |
| **maxRank, maxRankDCI-0-2**<br><br>Subset of PMIs addressed by TRIs from 1 to ULmaxRank (see TS 38.214 [19], clause 6.1.1.1). The field *maxRank* applies to DCI format 0_1 and the field *maxRankDCI-0-2* applies to DCI format 0_2 (see TS 38.214 [19], clause 6.1.1.1). |
| **mcs-Table, mcs-TableFormat0-2**<br><br>Indicates which MCS table the UE shall use for PUSCH without transform precoder (see TS 38.214 [19], clause 6.1.4.1). If the field is absent the UE applies the value 64QAM. The field *mcs-Table* applies to DCI format 0_0 and DCI format 0_1 and the field *mcs-TableDCI-0-2* applies to DCI format 0_2 (see TS 38.214 [19], clause 6.1.4.1). |
| **mcs-TableTransformPrecoder, mcs-TableTransformPrecoderDCI-0-2**<br><br>Indicates which MCS table the UE shall use for PUSCH with transform precoding (see TS 38.214 [19], clause 6.1.4.1) If the field is absent the UE applies the value 64QAM. The field *mcs-TableTransformPrecoder* applies to DCI format 0_0 and DCI format 0_1 and the field *mcs-TableTransformPrecoderDCI-0-2* applies to DCI format 0_2 (see TS 38.214 [19], clause 6.1.4.1). |
| **minimumSchedulingOffsetK2**<br><br>List of minimum K2 values. Minimum K2 parameter denotes minimum applicable value(s) for the *Time domain resource assignment* table for PUSCH (see TS 38.214 [19], clause 6.1.2.1). |
| **numberOfBitsRV-DCI-0-2**<br><br>Configures the number of bits for "Redundancy version" in the DCI format 0_2 (see TS 38.212 [17], clause 7.3.1 and TS 38.214 [19], clause 6.1.2.1). |
| **numberOfInvalidSymbolsForDL-UL-Switching**<br><br>Indicates the number of symbols after the last semi-static DL symbol that are invalid symbols for PUSCH repetition Type B. If it is absent, no symbol is explicitly defined for DL-to-UL switching (see TS 38.214 [19], clause 6.1). |
| **priorityIndicatorDCI-0-1, priorityIndicatorDCI-0-2**<br><br>Configures the presence of "priority indicator" in DCI format 0_1/0_2. When the field is absent in the IE, then the UE shall apply 0 bit for "Priority indicator" in DCI format 0_1/0_2. The field *priorityIndicatorDCI-0-1* applies to DCI format 0_1 and the field *priorityIndicatorDCI-0-2* applies to DCI format 0_2 (see TS 38.212 [17] clause 7.3.1 and TS 38.213 [13] clause 9). |
| **pusch-AggregationFactor**<br><br>Number of repetitions for data (see TS 38.214 [19], clause 6.1.2.1). If the field is absent the UE applies the value 1. |
| **pusch-RepTypeIndicatorDCI-0-1, pusch-RepTypeIndicatorDCI-0-2**<br><br>Indicates whether UE follows the behavior for "PUSCH repetition type A" or the behavior for "PUSCH repetition type B" for the PUSCH scheduled by DCI format 0_1/0_2 and for Type 2 CG associated with the activating DCI format 0_1/0_2.The value *pusch-RepTypeA* enables the 'PUSCH repetition type A' and the value *pusch-RepTypeB* enables the 'PUSCH repetition type B'. The field *pusch-RepTypeIndicatorDCI-0-1* applies to DCI format 0_1 and the field *pusch-RepTypeIndicatorDCI-0-2* applies to DCI format 0_2 (see TS 38.214 [19], clause 6.1.2.1). |

*transformPrecoder*

The UE specific selection of transformer precoder for PUSCH (see TS 38.214 [19], clause 6.1.3). When

the field is absent the UE applies the value of the field *msg3-transformPrecoder*.

**txConfig**

Whether UE uses codebook based or non-codebook based transmission (see TS 38.214 [19], clause 6.1.1). If the field is absent, the UE transmits PUSCH on one antenna port, see TS 38.214 [19], clause 6.1.1.

**uci-OnPUSCH-ListDCI-0-1, uci-OnPUSCH-ListDCI-0-2**

Configuration for up to 2 HARQ-ACK codebooks specific to DCI format 0_1/0_2. The field uci-OnPUSCH-ListDCI-0-1 applies to DCI format 0_1 and the field uci-OnPUSCH-ListDCI-0-2 applies to DCI format 0_2 (see TS 38.212 [17], clause 7.3.1 and TS 38.213 [13] clause 9.3).

**ul-AccessConfigListDCI-0-1, ul-AccessConfigListDCI-0-2**

List of the combinations of cyclic prefix extension, channel access priority class (CAPC), and UL channel access type (see TS 38.212 [17], Table 7.3.1.1.2-35) applicable for DCI format 0_1 and DCI format 0_2, respectively. The field *ul-AccessConfigListDCI-0-1-r17* only contains a list of UL channel access types and is only applicable for FR2-2 (see TS 38.212 [17], Table 7.3.1.1.2-35A).

**ul-FullPowerTransmission**

Configures the UE with UL full power transmission mode as specified in TS 38.213.

| *UCI-OnPUSCH* field descriptions |
| --- |
| **betaOffsets**<br>Selection between and configuration of dynamic and semi-static beta-offset for DCI formats other than DCI format 0_2. If the field is not configured, the UE applies the value 'semiStatic' (see TS 38.213 [13], clause 9.3). |
| **scaling**<br>Indicates a scaling factor to limit the number of resource elements assigned to UCI on PUSCH for DCI formats other than DCI format 0_2. Value *f0p5* corresponds to 0.5, value *f0p65* corresponds to 0.65, and so on. The value configured herein is applicable for PUSCH with configured grant (see TS 38.212 [17], clause 6.3). |

| *UCI-OnPUSCH-DCI-0-2* field descriptions |
| --- |
| **betaOffsetsDCI-0-2**<br>Configuration of beta-offset for DCI format 0_2. If semiStaticDCI-0-2 is chosen, the UE shall apply the value of 0 bit for the field of beta offset indicator in DCI format 0_2. If dynamicDCI-0-2 is chosen, the UE shall apply the value of 1 bit or 2 bits for the field of beta offset indicator in DCI format 0_2 (see TS 38.212 [17], clause 7.3.1 and TS 38.213 [13] clause 9.3). |
| **dynamicDCI-0-2**<br>Indicates the UE applies the value 'dynamic' for DCI format 0_2 (see TS 38.212 [17], clause 7.3.1 and TS 38.213 [13], clause 9.3). |
| **semiStaticDCI-0-2**<br>Indicates the UE applies the value 'semiStatic' for DCI format 0_2. (see TS 38.212 [17], clause 7.3.1 and see TS 38.213 [13], clause 9.3). |
| **scalingDCI-0-2**<br>Indicates a scaling factor to limit the number of resource elements assigned to UCI on PUSCH for DCI format 0_2. Value f0p5 corresponds to 0.5, value *f0p65* corresponds to 0.65, and so on (see TS 38.212 [17], clause 6.3). |

| Conditional Presence | Explanation |
|---|---|
| codebookBased | The field is mandatory present if *txConfig* is set to codebook and absent otherwise. |
| RepTypeB | The field is optionally present, Need S, if *pusch-RepTypeIndicatorDCI-0-1* is set to pusch-RepTypeB. It is absent otherwise. |
| RepTypeB2 | The field is optionally present, Need S, if *pusch-RepTypeIndicatorDCI-0-1* or *pusch-RepTypeIndicatorDCI-0-2* is set to pusch-RepTypeB. It is absent otherwise. |

Referring to Table 4, PUSCH-Config includes a transformPrecoder parameter.

The contents (the uplink channel structure, the uplink transmission/reception operation, and the Transform Precoder related configuration (Tables 2 to 4), etc.) described above may be applied in combination with methods proposed by the present disclosure to be described below or may be supplemented to clarify technical features of the methods proposed in the present disclosure. Methods to be described below are just distinguished for convenience and it is needless to say that some components of any one method may be substituted with some components of another method or may be applied in combination with each other.

Dynamic waveform switching (DWS) may be supported for coverage enhancement in NR. Hereinafter, a method for configuring a UL waveform of a UE according to a DCI format type and a situation when an indication field for the DWS is supported will be specifically described.

In a current NR, which waveform of CP-OFDM and DFT-S-OFDM is to be used is defined to be indicated through RRC signaling (e.g., SIB1, UE specific RRC signaling, etc.).

Specifically, in a 4-step RACH procedure, a waveform of an Msg. 3 PUSCH may be configured/indicated/determined as follows.

When the "msg3-transformPrecoder" is configured/indicated to be enabled (that is, when the UE receives a configuration including the msg3-transformPrecoder parameter (e.g., RACH-ConfigCommon in Table 2) from the base station), the transform precoder for Msg3 transmission is enabled. In other words, transform precoding for transmitting an Msg. 3 PUSCH is enabled. In this case, the UE uses the DFT-S-OFDM as a waveform of the Msg. 3 PUSCH.

When the "msg3-transformPrecoder" parameter field is empty (that is, when the UE receives a configuration without the msg3-transformPrecoder parameter (e.g., RACH-ConfigCommon in Table 2) from the base station, a transform precoder for Msg3 transmission is disabled. In other words, the transform precoding for transmitting the Msg. 3 PUSCH is disabled. In this case, the UE uses the CF-OFDM as the waveform of the Msg. 3 PUSCH.

In the case of a 2-step RACH procedure, a waveform of an MsgA PUSCH may be configured/indicated/determined as follows.

When the "msgA-TransformPrecoder" is configured/indicated to be enabled (that is, when the UE receives a configuration including the msgA-TransformPrecoder parameter configured to be 'enabled' (e.g., MsgA-PUSCH-Config in Table 3) from the base station), a transform precoder for MsgA transmission is enabled. In other words, transform precoding for transmitting an MsgA PUSCH is enabled. In this case, the UE uses the DFT-S-OFDM as a waveform of the MsgA PUSCH.

When the "msgA-TransformPrecoder" is configured/indicated to be disabled (that is, when the UE receives a configuration including the msgA-TransformPrecoder parameter configured to be 'disabled' (e.g., MsgA-PUSCH-Config in Table 3) from the base station), a transform precoder for MsgA transmission is disabled. In other words, transform precoding for transmitting the MsgA PUSCH is disabled. In this case, the UE uses the CP-OFDM as the waveform of the MsgA PUSCH.

UL channels (e.g., normal PUSCH, configured PUSCH, etc.) other than the Msg. 3 PUSCH and Msg. A PUSCH may be configured/indicated/determined as follows.

When the "transformPrecoder" is configured/indicated to be enabled (that is, when the UE receives a configuration including the transformPrecoder parameter configured to be 'enabled' (e.g., PUSCH-Config in Table 4) from the base station), a transform precoder for transmitting the other UL channel (e.g., PUSCH) is enabled. In other words, transform precoding for transmitting the other UL channel (e.g., PUSCH) is enabled. In this case, the UE uses the DFT-S-OFDM as a waveform of the other UL channel (e.g., PUSCH).

When the "transformPrecoder" is configured/indicated to be disabled (that is, when the UE receives a configuration including the transformPrecoder parameter configured to be 'disabled' (e.g., PUSCH-Config in Table 4) from the base station), the transform precoder for transmitting the other UL channel (e.g., PUSCH) is disabled. In other words, transform precoding for transmitting the other UL channel (e.g., PUSCH) is disabled. In this case, the UE uses the CP-OFDM as the waveform of the other UL channel (e.g., PUSCH).

Further, when the corresponding "transformPrecoder" parameter is not separately indicated, the UE operates according to the configuration of "msg3-transformPrecother". Transform precoding is applied or not applied based on the configuration (enabled or disabled) of msgA-TransformPrecoder. In other words, whether transform precoding is applied to uplink transmission may be determined based on the configuration (enabled or disabled) of the msgA-TransformPrecoder.

The dynamic waveform switching operation is considered for UL coverage enhancement of the existing NR system.

In the recent standardization meeting, there is discussion on how to interpret/define the operation of the UE/base station when a dynamic waveform switching indication field is introduced to DCI information. For example, there may be a difference in interpretation between DCI formats scrambled with C-RNTI and/or CS-RNTI applied based on DG PUSCH and/or CG PUSCH Type 2, which is a PUSCH transmission method supporting the dynamic waveform switching. For another example, with the introduction of the dynamic waveform switching indication field, if it is determined that which waveform (i.e., CP-OFDM or DFT-S-OFDM) is indicated to the UE, a field dependent on the waveform is generated, so a difference in DCI payload size is also addressed as an issue. On the other hand, CG PUSCH Type 1 has the characteristic that it is difficult to expect transmission operation through DCI reception because PUSCH transmission is performed only through higher layer (by RRC signaling) parameters based on its definition. Therefore, in order to equally match the differences in DCI payload sizes caused by the issues mentioned above, when the dynamic waveform switching indication field is introduced, it is necessary to newly define/determine how to perform the DCI size alignment used for each PUSCH transmission method, i.e., DG-PUSCH or CG-PUSCH Type 2.

First, the conventional DCI size alignment is conceptually described. A per-format based DCI size alignment method is defined that performs zero padding on an end of shorter DCI among compared DCIs to make the overall payload size the same. In performing DCI size alignment between DCIs corresponding to C-RNTI/CS-RNTI, the operation of performing zero padding from the MSB of each field of the DCI corresponding to the C-RNTI for each field of the DCI corresponding to the CS-RNTI (i.e., per-field alignment) to match the size is defined as shown in Table 5 below.

[Table 5]

| |
|---|
| 7.3.1 DCI formats<br>If the number of information bits in a DCI format is less than 12 bits, zeros shall be appended to the DCI format until the payload size equals 12.<br>7.3.1.1.2 Format 0_1<br><br>...<br><br>A UE does not expect that the bit width of a field in DCI format 0_1 with CRC scrambled by CS-RNTI is larger than corresponding bit width of same field in DCI format 0_1 with CRC scrambled by C-RNTI for the same serving cell. If the bit width of a field in the DCI format 0_1 with CRC scrambled by CS-RNTI is not equal to that of the corresponding field in the DCI format 0_1 with CRC scrambled by C-RNTI for the same serving cell, a number of most significant bits with value set to '0' are inserted to the field in DCI format 0_1 with CRC scrambled by CS-RNTI until the bit width equals that of the corresponding field in the DCI format 0_1 with CRC scrambled by C-RNTI for the same serving cell.<br>7.3.1.1.3 Format 0_2<br><br>...<br><br>A UE does not expect that the bit width of a field in DCI format 0_2 with CRC scrambled by CS-RNTI is larger than corresponding bit width of same field in DCI format 0_2 with CRC scrambled by C-RNTI for the same serving cell. If the bit width of a field in the DCI format 0_2 with CRC scrambled by CS-RNTI is not equal to that of the corresponding field in the DCI format 0_2 with CRC scrambled by C-RNTI for the same serving cell, a number of most significant bits with value set to '0' are inserted to the field in DCI format 0_2 with CRC scrambled by CS-RNTI until the bit width equals that of the corresponding field in the DCI format 0_2 with CRC scrambled by C-RNTI for the same serving cell. |

If a DCI indication field is introduced to support dynamic waveform switching based on the per-format or per-field based DCI size alignment which is the conventional DCI size alignment method, its interpretation may need to be newly defined.

Accordingly, the present disclosure proposes, when a dynamic waveform switching indication field (hereinafter referred to as a DWS field) is introduced and supported, a method of interpreting/determining the DWS field based on DCI which is monitored by a UE and is received via PDCCH.

The dynamic waveform switching (DWS) is an operation to enable or disable a dynamic transform precoder.

Accordingly, in the present disclosure, the 'dynamic waveform switching field' and the 'DWS field' may be interpreted/replaced with a 'transform precoder indicator field'. In addition, a higher layer parameter (RRC parameter) related to the enabled (or disabled) DWS may be interpreted/replaced with a higher layer parameter (RRC parameter) related to the presence of the transform precoder indicator field within DCI. In addition, an indication of a waveform (e.g., DFT-S-OFDM or CP-OFDM) may be interpreted/replaced with an indication of enabling/disabling a transform precoder/-transform precoding.

When an indication field for dynamic waveform switching is supported, a method of interpreting/determining a DWS field size of a UE based on a DCI format type and situation is described below.

In the present disclosure, for brevity, "Cyclic Redundancy Check (CRC) of specific DCI (e.g., DCI format 0_1, 0_2) has been scrambled with a specific Radio Network Temporary Identifier (RNTI) (e.g., Cell (C)-RNTI, Configured Scheduling (CS)-RNTI)" may be replaced and written as "DCI corresponding to a specific RNTI" or "DCI of a specific RNTI" or similar expressions, all of which have the same meaning.

There is a need to determine how Configured Grant (CG) configurations (e.g. CG-PUSCH Type 2), which can each have different waveforms, are per-field matched with DCI corresponding to the C-RNTI, in which the field size changes depending on the value of a DWS field. For example, the per-field matching may be performed assuming that a waveform equal to the waveform value indicated in the CG configurations (e.g. CG-PUSCH Type 2) is indicated in a DWS field of DCI corresponding to C-RNTI.

Method 1

A method of interpreting a DWS field when the DWS field is introduced (or present) to DCI format 0_1/0_2 is described below. Specifically, when i) DWS enabled (and/or disabled) configuration is supported based on higher layer parameters, and ii) DWS is enabled, a method of interpreting a DWS field in DCI format 0_1/0_2 for a PUSCH transmission method (e.g., DG PUSCH or CG PUSCH) is described.

Case 1. For DCI format 0_1/0_2 corresponding to a C-RNTI including a DWS field, a size of the DWS field may be set/determined to 1 bit.

For example, a value of the 1-bit size may represent a waveform value for dynamic waveform switching (e.g., CP-OFDM=0 (or 1), DFT-S-OFDM=1 (or 0)). For example, the value of the 1-bit size may represent the enabling or disabling of a transform precoder.

When a UE receives the DCI format 0_1/0_2 of the C-RNTI including the DWS field, the UE may interpret the DWS field as the 1-bit size and determine it as an indicated waveform for the dynamic waveform switching based on the value of 0 or 1 (e.g., CP-OFDM=0 (or 1), DFT-S-OFDM=1 (or 0)). The UE may additionally interpret fields (e.g., FDRA, TPMI, antenna port), that may vary depending on the indicated waveform value, in a subsequent process of interpreting DCI.

Case 2. For DCI format 0_1/0_2 corresponding to a CS-RNTI including a DWS field, when it is a case of performing activation/deactivation/release related to PUSCH (i.e., NDI=0), a size of the DWS field may be set/determined to 1 bit.

A value of the DWS field may be determined based on at least one of the following embodiments.

Alt 1. The value of the DWS field may be defined/indicated to be the same as a waveform semi-statically configured in a higher layer parameter.

The value of the DWS field may be defined to have the same waveform as a value set to the higher layer parameter (e.g. transformPrecoder). For example, if transformPrecoder=enabled, the DWS field may be indicated as a value corresponding to DFT-S-OFDM. A UE may interpret the DWS field as the 1-bit size when receiving the DCI format 0_1/0_2 of the CS-RNTI set to 'NDI=0' including the DWS field. The 'NDI=0' means that a value of a new data indicator (NDI) field in the DCI format 0_1/0_2 is 0. The UE may check whether a waveform indicated by the set higher layer parameter (transformPrecoder) is the same as a waveform indicated by the DWS field. The waveform may be interpreted/replaced to enabling/disabling of a transform precoder/transform precoding. The UE expects that the same waveform as a waveform configured/indicated via higher layer signaling is indicated through the DWS field. Otherwise, the UE may determine that the activation/deactivation/release operation of the corresponding CG-PUSCH is invalid (= error case).

Alt 2. Definition to reserved bit

A DWS field may be defined as a reserved bit. When a UE receives DCI format 0_1/0_2 of CS-RNTI set to 'NDI=0' including the DWS field, the UE does not perform a separate interpretation because the DWS field is the reserved bit. The fact that the UE does not perform the separate interpretation may mean that it does not perform an operation (determining whether to apply transform precoding) based on a value of the DWS field.

Alt 3. DWS field value has no separate definition/restriction

A value of a DWS field may be defined regardless of the value set to the higher layer parameter (e.g.,

transformPrecoder). That is, from a base station perspective, there may be no separate restriction on the value of the DWS field. When a UE receives DCI format 0_1/0_2 of CS-RNTI set to 'NDI=0' including the DWS field, the UE interprets the DWS field as 1-bit size, but does not separately interpret the value of the DWS field.

In a subsequent process of interpreting DCI, the UE may additionally interpret fields (e.g., FDRA, TPMI, antenna port) that may vary depending on a waveform value indicated through a DWS field of DCI corresponding to the C-RNTI and a waveform value for CG-PUSCH indicated via higher layer signaling.

Case 3. It may be assumed that DCI format 0_1/0_2 corresponding to a CS-RNTI including a DWS field is for retransmission (i.e., retransmission of CG PUSCH) (i.e., NDI=1). That is, if value of an NDI field of the DCI format 0_1/0_2 is 1, a size of the DWS field may be set/determined to 1 bit.

For example, a value of the 1-bit size may represent a waveform value for dynamic waveform switching (e.g. CP-OFDM=0 (or 1), DFT-S-OFDM=1 (or 0)). For example, the value of the 1-bit size may represent the enabling or disabling of a transform precoder.

When a UE receives the DCI format 0_1/0_2 of the CS-RNTI set to 'NDI=1' including the DWS field, the UE may interpret the DWS field as the 1-bit size and determine it as an indicated waveform for the dynamic waveform switching based on the value of 0 or 1 (e.g. CP-OFDM=0 (or 1), DFT-S-OFDM=1 (or 0)). The UE may additionally interpret fields (e.g., FDRA, TPMI, antenna port), that may vary depending on the indicated waveform value, in a subsequent process of interpreting DCI.

Method 2

A method of interpreting a DWS field when the DWS field is introduced (or present) to DCI format 0_1/0_2 is described below. Specifically, when i) DWS enabled (and/or disabled) configuration is supported based on higher layer parameters, and ii) DWS is disabled, a method of interpreting a DWS field in DCI format 0_1/0_2 for a PUSCH transmission method (e.g., DG PUSCH or CG PUSCH) is described.

It is obvious that PUSCH transmission can be performed through a dynamic indication even if dynamic waveform switching is not supported, as the higher layer parameter is set to DWS disabled. In this case, the UE's interpretation method may differ based on the presence or absence of the DWS field when configuring a DCI payload.

Approach 1. Interpretation method when the DWS field is present

Alt 1. The value of the DWS field may be defined/indicated to be the same as a waveform semi-statically configured in the higher layer parameter.

The value of the DWS field may be defined to have the same waveform as a value set to the higher layer parameter (e.g. transformPrecoder). For example, if transformPrecoder=enabled, the DWS field may be indicated as a value corresponding to DFT-S-OFDM. The UE may interpret the DWS field as 1-bit size when receiving DCI format 0_1/0_2 of C-RNTI/CS-RNTI including the DWS field, and may check whether a waveform indicated by transformPrecoder set to the higher layer parameter is the same as a waveform indicated by the DWS field. The UE expects that the same waveform as a waveform configured/indicated via higher layer signaling is indicated through the DWS field. Otherwise, the UE may determine that the activation/deactivation/release operation of the corresponding CG-PUSCH is invalid (= error case).

Or, since the dynamic waveform switching is not supported, the UE may be defined/configured not to interpret the corresponding value.

Alt 2. Definition to reserved bit

The DWS field may be defined as a reserved bit. When a UE receives DCI format 0_1/0_2 of C-RNTI/CS-RNTI including the DWS field, the UE does not perform a separate interpretation because the DWS field is the reserved bit.

Alt 3. DWS field value has no separate definition/restriction

The value of the DWS field may be defined regardless of the value set to the higher layer parameter (e.g., transformPrecoder). That is, from a base station perspective, there may be no separate restriction on the value of the DWS field. When a UE receives the DCI format 0_1/0_2 of the C-RNTI/CS-RNTI including the DWS field, the UE interprets the DWS field as 1-bit size, but does not separately interpret the value of the DWS field.

In a subsequent process of interpreting DCI, the UE may additionally interpret fields (e.g., FDRA, TPMI, antenna port) that may vary depending on a waveform value for DG-PUSCH indicated via the higher layer signaling and a waveform value for CG-PUSCH indicated via the higher layer signaling.

Approach 2. Interpretation method when the DWS field is absent

The absence of the DWS field may mean that the field is absent in the DCI format or that the field is set to 0 bit in the DCI format.

If a higher layer parameter for dynamic waveform switching is set to 'DWS_Support-r18', the number of bits of the DWS field according to the present embodiment may be expressed in the following form.

→ 0 bit if the higher layer parameter DWS_Support-r18= disabled

If a new value 'dynamic' is defined to the higher layer parameter 'transformPrecoder' for the dynamic waveform switching, the number of bits of the DWS field according to the present embodiment may be expressed in the following form.

→ 0 bit unless the higher layer parameter transformPrecoder=dynamic

In this case, the UE performs an interpretation operation for the existing DCI payload size when the DWS field is absent.

The above-described embodiments describe the methods of defining the DWS field with 1-bit size in which a single-cell environment is assumed, and the UE/base station operations therefor. However, the scope of application of the embodiments of the present disclosure is not limited to the single-cell environment. Specifically, the above-described embodiments can be applied equally or similarly even when a DWS field consisting of multiple bits is introduced in a multi-cell environment.

In other words, in the DWS field consisting of the multiple bits, a field size targeting a specific cell may be 1 bit, and the above-described embodiments can be applied to the methods of defining the DWS field of the 1-bit size and the UE/base station operations therefor. In this case, one proposed method can be applied commonly to multiple cells, or an independent proposed method can be configured/applied for each cell.

Embodiments based on the above proposed methods 1 and 2 can be configured/applied to other UL signals/channels, such as MSG3 PUSCH, MSGA preamble/PUSCH and/or PUSCH/PUCCH. Since examples of the proposed methods described above can also be included as one of the implementation methods of the present disclosure, it is obvious that they can be considered as a kind of proposed methods. In addition, the proposed methods described above can be implemented independently, but can also be implemented in the form of a combination (or merge) of some proposed methods. Information on whether the proposed methods are applied (or information on rules of the proposed methods) may be defined as a rule so that the base station informs the UE via a predefined signal (e.g., a physical layer signal or a higher layer signal). For example, the higher layer may include one or more of functional layers such as MAC, RLC, PDCP, RRC, and SDAP.

Methods, embodiments, or descriptions for implementing the methods proposed in the present disclosure can be applied separately, or one or more methods (or embodiments or descriptions) can be applied in combination.

For example, an operation based on at least one of the embodiments of the method 1 and/or the method 2 may be based on Table 6 below.

[Table 6]

| 6.1.3 UE procedure for applying transform precoding on PUSCH |
|---|
| For a PUSCH scheduled by RAR UL grant, or for a PUSCH scheduled by fallbackRAR UL grant, or for a PUSCH scheduled by DCI format 0_0 with CRC scrambled by TC-RNTI, the UE shall consider the transform precoding either 'enabled' or 'disabled' according to the higher layer configured parameter *msg3-transformPrecoder*. |
| For a MsgA PUSCH, the UE shall consider the transform precoding either 'enabled' or 'disabled' according to the higher layer configured parameter *msgA-TransformPrecoder*. If higher layer parameter *msgA-TransformPrecoder* is not configured, the UE shall consider the transform precoding either 'enabled' or 'disabled' according to the higher layer configured parameter *msg3-transformPrecoder*. |
| For PUSCH transmission scheduled by a PDCCH with CRC scrambled by CS-RNTI with NDI=1, C-RNTI, or MCS-C-RNTI or SP-CSI-RNTI: |
|     - If the DCI with the scheduling grant was received with DCI format 0_0, the UE shall, for this PUSCH transmission, consider the transform precoding either enabled or disabled according to the higher layer configured parameter *msg3-transformPrecoder*. |
|     - If the DCI with the scheduling grant was not received with DCI format 0_0 |
|         - If the DCI with the scheduling grant was received with DCI format 0_1 or 0_2 with CRC scrambled by C-RNTI, MCS-RNTI, or CS-RNTI with NDI=1 and if the UE is configured with a higher layer parameter [*dynamicTransformPrecoderIndicationDCI-0-1*] in *pusch-Config* for DCI format 0_1 or [*dynamicTransformPrecoderIndicationDCI-0-2*] in *pusch-Config* for DCI format 0_2 and the higher layer parameter is set to 'enabled', |

(continued)

| |
|---|
| - the UE shall, for this PUSCH transmission, consider the transform precoding either enabled or disabled according to the Transform precoder indicator field in the DCI with the scheduling grant.<br>- For *pusch-TimeDomainAllocationListForMultiPUSCH* in *pusch-Config,* the UE shall, for all PUSCH transmissions, consider the transform precoding either enabled or disabled according to Transform precoder indicator field in the DCI format 0_1 with the scheduling grant.<br>- If *resourceAllocation* in *pusch-Config* for DCI format 0_1 or *resourceAllocationDCI-0-2* in *pusch-Config* for DCI format 0_2 is set to *resourceAllocationType0,* or if the resource allocation is set to resource allocation type 0 according to the DCI configuration as described in clauses 7.3.1.1.2 and 7.3.1.1.3 of [6, TS 38.212], or if *dmrs-Type* in *DMRS-UplinkConfig* is set to 'type 2' for this PUSCH transmission, the UE does not expect that the Transform precoder indicator field in the DCI with the scheduling grant indicates that transform precoding is enabled.<br>- If the UE is configured with the higher layer parameter *enhanced-dmrs-Type-r18* in *DMRS-UplinkConfig,* and if the scheduling grant indicates that transform precoding is enabled for the scheduled PUSCH transmission, the UE ignores the higher layer parameters *enhanced-dmrs-Type-r18* in *DMRS-UplinkConfig,* if configured, for the DM-RS transmission of the scheduled PUSCH transmission.<br>  - Otherwise,<br>    - If the UE is configured with the higher layer parameter *transformPrecoder* in *pusch-Config,* the UE shall, for this PUSCH transmission, consider the transform precoding either enabled or disabled according to this parameter.<br>    - If the UE is not configured with the higher layer parameter *transformPrecoder* in *pusch-Config,* the UE shall, for this PUSCH transmission, consider the transform precoding either enabled or disabled according to the higher layer configured parameter *msg3-transformPrecoder.* |
| For PUSCH transmission with a configured grant<br>    - If the UE is configured with the higher layer parameter *transformPrecoder* in *configuredGrantConfig,* the UE shall, for this PUSCH transmission, consider the transform precoding either enabled or disabled according to this parameter.<br>    - If the UE is not configured with the higher layer parameter transformPrecoder in configuredGrantConfig, the UE shall, for this PUSCH transmission, consider the transform precoding either enabled or disabled according to the higher layer configured parameter msg3-transformPrecoder. |

For example, a DCI format including a DWS field (transform precoder indicator field) based on at least one of the embodiments of the method 1 and/or the method 2 may be based on Table 7 below.

[Table 7]

| |
|---|
| 7.3.1.1.2 Format 0_1<br>DCI format 0_1 is used for the scheduling of one or multiple PUSCH in one cell, or indicating CG downlink feedback information (CG-DFI) to a UE.<br>The following information is transmitted by means of the DCI format 0_1 with CRC scrambled by C-RNTI or CS-RNTI or SP-CSI-RNTI or MCS-C-RNTI:<br>    - Transform precoder indicator - 0 or 1 bit<br>      - 1 bit if the higher layer parameter *dynamicTransformPrecoderIndicationDCI-0-1* is configured to 'enabled ' and if the UE is configured to monitor DCI format 0_1 with CRC scrambled by C-RNTI or CS-RNTI or MCS-C-RNTI, where the bit value of 0 indicates that transform precoder is enabled and the bit value of 1 indicates that transform precoder is disabled. For a DCI format 0_1 with CRC scrambled by CS-RNTI and the value indicated by new data indicator field is 0, or for a DCI format 0_1 with CRC scrambled by SP-CSI-RNTI, the bit is reserved.<br>      - 0 bit otherwise.<br>7.3.1.1.3 Format 0_2<br>DCI format 0_2 is used for the scheduling of PUSCH in one cell.<br>The following information is transmitted by means of the DCI format 0_2 with CRC scrambled by C-RNTI or CS-RNTI or SP-CSI-RNTI or MCS-C-RNTI:<br>    - Transform precoder indicator - 0 or 1 bit |

(continued)

> - 1 bit if the higher layer parameter *dynamicTransformPrecoderIndicationDCI-0-2* is configured to 'enabled ' and if the UE is configured to monitor DCI format 0_2 with CRC scrambled by C-RNTI or CS-RNTI or MCS-C-RNTI, where the bit value of 0 indicates that transform precoder is enabled and the bit value of 1 indicates that transform precoder is disabled. For a DCI format 0_2 with CRC scrambled by CS-RNTI and the value indicated by new data indicator field is 0, or for a DCI format 0_2 with CRC scrambled by SP-CSI-RNTI, the bit is reserved.
> - 0 bit otherwise.

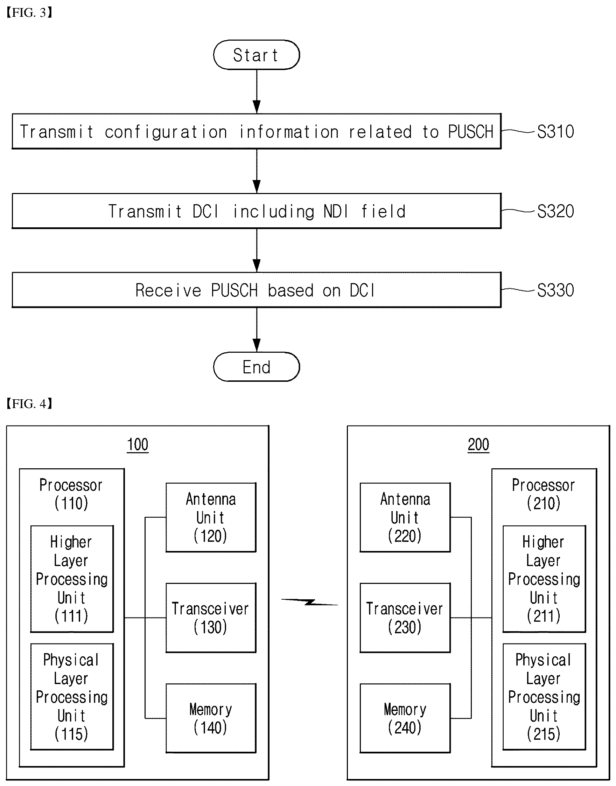

From an implementation perspective, operations of a base station/UE according to the above-described embodiments (e.g., operations based on at least one of the method 1 and/or the method 2) can be processed by a device (e.g., reference numerals 100 and 200) of FIG. 4 described below.

Further, the operations of the base station/UE according to the above-described embodiments (e.g., operations based on at least one of the method 1 and/or the method 2) can be stored in a memory (e.g., memories 140 and 240 of FIG. 4) in the form of commands/programs (e.g., instructions, executable codes) for running at least one processor (e.g., processors 110 and 210 of FIG. 4).

Below, the above-described embodiments are described in detail from a UE and base station operation perspective with reference to FIGS. 2 and 3. Methods described below are merely distinguished for convenience of explanation. Thus, it is obvious that partial configuration of any method can be substituted or combined with partial configuration of another method.

FIG. 2 is a flowchart illustrating a method performed by a user equipment according to an embodiment of the present disclosure.

Referring to FIG. 2, a method performed by a user equipment (UE) according to an embodiment of the present disclosure includes a step S210 of receiving configuration information related to PUSCH, a step S220 of receiving DCI including NDI, and a step S230 of transmitting the PUSCH based on the DCI.

In the step S210, the UE receives configuration information related to a physical uplink shared channel (PUSCH) from a base station.

The configuration information may be based on PUSCH-config. The configuration information may include a higher layer parameter based on at least one of the method 1 and/or the method 2 described above. For example, the configuration information may include a parameter (e.g., dynamicTransformPrecoderFieldPresenceDCI-0-1, dynamicTransformPrecoderFieldPresenceDCI-0-2 of Table 4) related to a presence of a transform precoder indicator field in DCI format 0_1/DCI format 0_2.

In the step S220, the UE receives downlink control information (DCI) including a new data indicator (NDI) field from the base station.

According to an embodiment, based on the parameter related to the presence of the transform precoder indicator field in the DCI being configured based on the configuration information, the transform precoder indicator field may be based on 1-bit. The present embodiment may be based on the method 1 and/or the method 2. More specifically, i) the transform precoder indicator field may be present in the DCI based on the parameter being configured, and ii) a size of the transform precoder indicator field in the DCI may be set to 0 based on the parameter being not configured.

For example, a value of the 1-bit may indicate that a transform precoder is enabled or disabled.

For example, based on i) a cyclic redundancy check (CRC) related to the DCI being scrambled by a configured scheduling (CS)-radio network temporary identifier (RNTI), and ii) a value of the NDI field being '0', the 1-bit may be reserved.

For example, based on the parameter being not configured, the transform precoder indicator field may be 0 bit. The present embodiment may be based on the method 2. Based on a payload size of a DCI format related to the DCI being less than a defined value (e.g., 12 of Table 5), zeros may be appended to the DCI format until the payload size equals the defined value. That is, one or more padding bits set to zero for DCI size alignment may be appended to the DCI format.

For example, the DCI format related to the DCI may be DCI format 0_1 or DCI format 0_2.

The CRC may be scrambled by the CS-RNTI, a cell (C)-RNTI, a semi-persistent (SP)-channel state information (CSI)-RNTI, or a modulation coding scheme (MCS)-C-RNTI.

In the step S230, the UE transmits the PUSCH to the base station based on the DCI.

According to an embodiment, a grant related to the PUSCH may be a dynamic grant (DG) or a configured grant (CG). The PUSCH may be a DG PUSCH or a CG PUSCH. For example, the PUSCH may be scheduled based on the DCI. For example, the scheduling of the PUSCH may be activated based on the DCI. The configured grant may be configured grant Type 2.

According to an embodiment, the above-described dynamic waveform switching may be applied for a PUSCH retransmission (based on Type 2 configured grant). Specifically, based on i) the CRC being scrambled by the CS-RNTI, and ii) the value of the NDI field being '1', a transform precoding for the PUSCH may be enabled or disabled based on the transform precoder indicator field. The transmission of the PUSCH may be based on the PUSCH retransmission. The present embodiment may be based on the Case 3 of the method 1.

In this instance, parameters excluding parameters related to a transform precoder from parameters in the configuration information may be applied to the PUSCH retransmission. Specifically, whether to enable the transform precoder is indicated based on the transform precoder indicator field instead of the higher layer parameter (e.g., transformPrecoder parameter). For example, parameters in the configuration information excluding at least one parameter may be applied to the PUSCH retransmission. The at least one parameter may include the transformPrecoder parameter.

According to an embodiment, the transform precoder indicator field is applied to a PUSCH scheduled by DCI based on an RNTI different from the CS-RNTI. Specifically, based on the CRC being scrambled by the C-RNTI or the MCS-C-RNTI, the transform precoding for the PUSCH may be enabled or disabled based on the transform precoder indicator field.

According to an embodiment, referring to Table 5, a size of a first field in a DCI format based on a first RNTI (e.g., CS-RNTI) may be equal to the size of the same field in a DCI format based on a second RNTI (e.g., C-RNTI). That is, the UE does not expect that the size of the first field is larger than the size of the same field in the DCI format based on the second RNTI. Specifically, for the same serving cell, a bit width of the first field in the DCI format 0_1 or the DCI format 0_2 based on the CS-RNTI may be equal to a bit width of the same field in the DCI format 0_1 or the DCI format 0_2 based on the C-RNTI. The first field may be the transform precoder indicator field. In other words, a bit width (1) of the transform precoder indicator field in the DCI format based on the CS-RNTI is the same as a bit width (1) of the transform precoder indicator field in the DCI format based on the C-RNTI. However, as described above, the same field with the same bit width may be interpreted/applied differently. For example, based on the value of the NDI field in the DCI format based on the CS-RNTI being 0, bits of the transform precoder indicator field are reserved. For example, whether to enable the transform precoder is indicated based on the value of the transform precoder indicator field in the DCI format based on the C-RNTI (or the DCI format based on the CS-RNTI in which the value of the NDI field is 1).

According to an embodiment, for the activation of the above-described scheduling, validation of the DCI format may be performed. Specifically, based on i) the CRC being scrambled by the CS-RNTI, and ii) the value of the NDI field being '0': the validation of the DCI (i.e., the DCI format) may be performed for scheduling activation based on a configured grant. Based on the fields in the DCI, the validation of the DCI may be achieved. More specifically, based on the value of each of the fields being set as defined, the validation may be achieved.

Based on the validation being achieved, the UE may regard information in the DCI to be a valid activation or a valid release of the configured grant (i.e., configured UL grant Type 2).

Based on the validation being not achieved, the UE may discard all information in the DCI.

The fields may include at least one of i) a HARQ process number field, ii) a redundancy version field, iii) a modulation and coding scheme field, and/or iv) a frequency domain resource assignment field.

For example, a waveform related to the transmission of the PUSCH may be based on i) cyclic prefix-orthogonal frequency division multiplexing (CP-OFDM) or ii) discrete Fourier transform-spreading-OFDM (DFT-S-OFDM). The transform precoding may be related to the DFT-S-OFDM.

The operations based on the steps S210 to S230 described above may be implemented by a device of FIG. 4. For example, a UE 200 may control one or more transceivers 230 and/or one or more memories 240 so as to perform the operations based on the steps S210 to S230.

Below, the above-described embodiments are described in detail from a perspective of base station operation.

Steps S310 to S330 described below correspond to the steps S210 to S230 described with reference to FIG. 2. Considering the above correspondence, redundant description is omitted. That is, the detailed description of the base station operation described below can be replaced with the description/embodiment of FIG. 2 corresponding to the base station operation. For example, the description/embodiment of the steps S210 to S230 of FIG. 2 may be additionally applied to the base station operation of the steps S310 to S330 described below.

FIG. 3 is a flowchart illustrating a method performed by a base station according to another embodiment of the present disclosure.

Referring to FIG. 3, a method performed by a base station according to another embodiment of the present disclosure includes a step S310 of transmitting configuration information related to PUSCH, a step S320 of transmitting DCI including NDI, and a step S330 of receiving the PUSCH based on the DCI.

In the step S310, the base station transmits configuration information related to a physical uplink shared channel (PUSCH) to a UE.

In the step S320, the base station transmits downlink control information (DCI) including a new data indicator (NDI) field to the UE.

In the step S330, the base station receives the PUSCH from the UE based on the DCI.

The operations based on the steps S310 to S330 described above may be implemented by a device of FIG. 4. For example, a base station 100 may control one or more transceivers 130 and/or one or more memories 140 so as to perform the operations based on the steps S310 to S330.

The operations/terms based on the above-described embodiments have been described assuming the 5G system. However, this is merely for convenience of explanation and is not intended to limit the scope of application of the technical problem and the problem solution to be solved by the present disclosure to a specific system. That is, the technical challenges/technical issues/problems mentioned in the present disclosure may equally exist in other systems (e.g., 6G system). It is obvious that embodiments of the present disclosure can be extended and applied to solve the same problems in the other systems. Therefore, for expanded application of embodiments of the present disclosure to other systems, terms defined/described based on the 5G system can be replaced/changed with terms defined in the other systems (or generalized terms not specific to one system).

For example, a physical uplink shared channel (PUSCH) may be replaced/changed with a first uplink channel.

For example, configuration information may be replaced/changed with first information.

For example, downlink control information (DCI) may be replaced/changed with second information.

A device to which an embodiment of the present disclosure is applicable (a device implementing the method/operation according to an embodiment of the present disclosure) is described below with reference to FIG. 4.

FIG. 4 illustrates configuration of a first device and a second device according to an embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may performs downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 210 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

The wireless communication technology implemented in the devices 100 and 200 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 100 and 200 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 100 and 200 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

**Claims**

1. A method performed by a user equipment (UE), the method comprising:

   receiving configuration information related to a Physical Uplink Shared CHannel (PUSCH);
   receiving Downlink Control Information (DCI) including a New Data Indicator (NDI) field; and
   transmitting the PUSCH based on the DCI,
   wherein, based on a parameter related to a presence of a transform precoder indicator field in the DCI being configured based on the configuration information, the transform precoder indicator field is based on 1 bit, wherein a value of the 1 bit indicates that a transform precoder is enabled or disabled, and
   wherein, based on i) a Cyclic Redundancy Check (CRC) related to the DCI being scrambled by a Configured Scheduling (CS)-Radio Network Temporary Identifier (RNTI) and ii) a value of the NDI field being '0': the 1 bit is reserved.

2. The method of claim 1, wherein, based on the parameter being not configured, the transform precoder indicator field is based on 0 bit.

3. The method of claim 1, wherein a grant related to the PUSCH is a dynamic grant or a configured grant.

4. The method of claim 1, wherein a DCI format related to the DCI is DCI format 0_1 or DCI format 0_2.

5. The method of claim 4, wherein the CRC is scrambled by the CS-RNTI, a cell (C)-RNTI, a semi-persistent (SP)-channel state information (CSI)-RNTI, or a modulation coding scheme (MCS)-C-RNTI.

6. The method of claim 5, wherein, based on i) the CRC being scrambled by the CS-RNTI, and ii) the value of the NDI field being '1': a transform precoding for the PUSCH is enabled or disabled based on the transform precoder indicator field.

7. The method of claim 6, wherein the transmission of the PUSCH is based on a PUSCH retransmission.

8.

   The method of claim 7, wherein parameters in the configuration information excluding at least one parameter are applied to the PUSCH retransmission, and
   wherein the at least one parameter includes transformPrecoder parameter.

9. The method of claim 5, wherein based on the CRC being scrambled by the C-RNTI or the MCS-C-RNTI: a transform precoding for the PUSCH is enabled or disabled based on the transform precoder indicator field.

10. The method of claim 5, wherein for the same serving cell, a bit width of a first field in the DCI format 0_1 or the DCI format 0_2 based on the CS-RNTI is equal to a bit width of the same field in the DCI format 0_1 or the DCI format 0_2 based on the C-RNTI.

**11.** The method of claim 10, wherein the first field is the transform precoder indicator field.

**12.** The method of claim 2, wherein based on a payload size of a DCI format related to the DCI being less than a defined value, zeros are appended to the DCI format until the payload size equals the defined value.

**13.** The method of claim 1, wherein based on i) the CRC being scrambled by the CS-RNTI, and ii) the value of the NDI field being '0': a validation of the DCI is performed for scheduling activation based on a configured grant.

**14.** The method of claim 13, wherein the validation of the DCI is achieved based on fields in the DCI.

**15.** A user equipment (UE) comprising:

one or more transceivers;
one or more processors; and
one or more memories connected to the one or more processors and storing instructions,
wherein the instructions configure the one or more processors to perform all steps of a method according to any one of claims 1 to 14 based on being executed by the one or more processors.

**16.** A device comprising:

one or more memories; and
one or more processors operably connected to the one or more memories,
wherein the one or more memories store instructions that configure the one or more processors to perform all steps of a method according to any one of claims 1 to 14 based on being executed by the one or more processors.

**17.** One or more non-transitory computer readable mediums storing instructions,
wherein the instructions executable by one or more processors configure the one or more processors to perform all steps of a method according to any one of claims 1 to 14.

**18.** A method performed by a base station, the method comprising:

transmitting configuration information related to a Physical Uplink Shared CHannel (PUSCH);
transmitting Downlink Control Information (DCI) including a New Data Indicator (NDI) field; and
receiving the PUSCH based on the DCI,
wherein, based on a parameter related to a presence of a transform precoder indicator field in the DCI being configured based on the configuration information, the transform precoder indicator field is based on 1 bit,
wherein a value of the 1 bit indicates that a transform precoder is enabled or disabled, and
wherein, based on i) a Cyclic Redundancy Check (CRC) related to the DCI being scrambled by a Configured Scheduling (CS)-Radio Network Temporary Identifier (RNTI) and ii) a value of the NDI field being '0': the 1 bit is reserved.

**19.** A base station comprising:

one or more transceivers;
one or more processors; and
one or more memories connected to the one or more processors and storing instructions,
wherein the instructions configure the one or more processors to perform all steps of a method according to claim 18 based on being executed by the one or more processors.

【FIG. 1】

UE                                                    BASE STATION

                                                          S110
                                          ┌─────────────────────┐
                                          │  UPLINK SCHEDULING   │
                                          └─────────────────────┘

                                                          S120
        DCI FOR UPLINK SCHEDULING (PDCCH)
    ◄─────────────────────────────────────────────────────

                                                          S130
              UPLINK DATA (PUSCH)
    ─────────────────────────────────────────────────────►

【FIG. 2】

```
                    ┌──────────────┐
                    │    Start     │
                    └──────┬───────┘
                           │
                           ▼
   ┌────────────────────────────────────────────────────┐
   │ Receive configuration information related to PUSCH │──── S210
   └────────────────────────────────────────────────────┘
                           │
                           ▼
   ┌────────────────────────────────────────────────────┐
   │          Receive DCI including NDI field           │──── S220
   └────────────────────────────────────────────────────┘
                           │
                           ▼
   ┌────────────────────────────────────────────────────┐
   │            Transmit PUSCH based on DCI             │──── S230
   └────────────────────────────────────────────────────┘
                           │
                           ▼
                    ┌──────────────┐
                    │     End      │
                    └──────────────┘
```

【FIG. 3】

```
                    ( Start )
                        |
                        v
  +------------------------------------------------------+
  | Transmit configuration information related to PUSCH  |---S310
  +------------------------------------------------------+
                        |
                        v
  +------------------------------------------------------+
  |          Transmit DCI including NDI field            |---S320
  +------------------------------------------------------+
                        |
                        v
  +------------------------------------------------------+
  |            Receive PUSCH based on DCI                |---S330
  +------------------------------------------------------+
                        |
                        v
                     ( End )
```

【FIG. 4】

```
  +-------------------------------------+        +-------------------------------------+
  |              100                    |        |              200                    |
  |  +-----------+   +-----------+      |        |  +-----------+   +-----------+      |
  |  | Processor |   |  Antenna  |      |        |  |  Antenna  |   | Processor |      |
  |  |  (110)    |   |   Unit    |      |        |  |   Unit    |   |  (210)    |      |
  |  | +-------+ |   |  (120)    |      |        |  |  (220)    |   | +-------+ |      |
  |  | |Higher | |   +-----------+      |        |  +-----------+   | |Higher | |      |
  |  | |Layer  | |                      |        |                  | |Layer  | |      |
  |  | |Process| |   +-----------+      |   ~    |  +-----------+   | |Process| |      |
  |  | |ing    | |   |Transceiver|      |        |  |Transceiver|   | |ing    | |      |
  |  | |Unit   | |   |  (130)    |      |        |  |  (230)    |   | |Unit   | |      |
  |  | |(111)  | |   +-----------+      |        |  +-----------+   | |(211)  | |      |
  |  | +-------+ |                      |        |                  | +-------+ |      |
  |  | +-------+ |   +-----------+      |        |  +-----------+   | +-------+ |      |
  |  | |Physical| |  |  Memory   |      |        |  |  Memory   |   | |Physical| |     |
  |  | |Layer  | |   |  (140)    |      |        |  |  (240)    |   | |Layer  | |      |
  |  | |Process| |   +-----------+      |        |  +-----------+   | |Process| |      |
  |  | |ing    | |                      |        |                  | |ing    | |      |
  |  | |Unit   | |                      |        |                  | |Unit   | |      |
  |  | |(115)  | |                      |        |                  | |(215)  | |      |
  |  | +-------+ |                      |        |                  | +-------+ |      |
  |  +-----------+                      |        |                  +-----------+      |
  +-------------------------------------+        +-------------------------------------+
```

## INTERNATIONAL SEARCH REPORT

| International application No. |
| --- |
| **PCT/KR2024/004479** |

**A. CLASSIFICATION OF SUBJECT MATTER**

**H04W 72/232**(2023.01)i; **H04W 72/1268**(2023.01)i; **H04L 1/00**(2006.01)i; **H04L 27/26**(2006.01)i

According to International Patent Classification (IPC) or to both national classification and IPC

**B. FIELDS SEARCHED**

Minimum documentation searched (classification system followed by classification symbols)

H04W 72/232(2023.01); H04B 7/024(2017.01); H04B 7/0456(2017.01); H04W 72/12(2009.01); H04W 72/14(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PUSCH, NDI, DCI, transform precoder indicator field, presence, enable, disable, CRC, CS-RNTI, scramble, reserved, dynamic grant, configured grant, DCI format 0_1, DCI format 0_2, C-RNTI, SP-CSI-RNTI, MCS-C-RNTI, retransmission, bit width, payload size, activation, validation

**C. DOCUMENTS CONSIDERED TO BE RELEVANT**

| Category* | Citation of document, with indication, where appropriate, of the relevant passages | Relevant to claim No. |
| --- | --- | --- |
| Y | ZTE. Discussion on dynamic waveform switching. R1-2300346, 3GPP TSG RAN WG1 #112, Athens, Greece. 17 February 2023. See sections 2.2.1-2.3.2. | 1-19 |
| Y | US 2022-0361230 A1 (SHARP KABUSHIKI KAISHA) 10 November 2022 (2022-11-10) See paragraphs [0214], [0233], [0251] and [0293]; and figure 6. | 1-19 |
| Y | 3GPP; TSG RAN; NR; Physical layer procedures for data (Release 17). 3GPP TS 38.214 V17.5.0. 30 March 2023. See pages 44-164. | 7-8 |
| Y | 3GPP; TSG RAN; NR; Multiplexing and channel coding (Release 17). 3GPP TS 38.212 V17.5.0. 30 March 2023. See pages 117-131. | 10-12 |
| A | KR 10-2508795 B1 (LG ELECTRONICS INC.) 10 March 2023 (2023-03-10) See paragraphs [0101]-[0109]. | 1-19 |

☐ Further documents are listed in the continuation of Box C.  ☑ See patent family annex.

| | |
| --- | --- |
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **06 August 2024** | **07 August 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/004479**

| Patent document cited in search report | | | Publication date (day/month/year) | Patent family member(s) | | | Publication date (day/month/year) |
|---|---|---|---|---|---|---|---|
| US | 2022-0361230 | A1 | 10 November 2022 | CN | 114430928 | A | 03 May 2022 |
| | | | | EP | 4042807 | A1 | 17 August 2022 |
| | | | | EP | 4042807 | A4 | 18 October 2023 |
| | | | | WO | 2021-066013 | A1 | 08 April 2021 |
| KR | 10-2508795 | B1 | 10 March 2023 | CN | 115997347 | A | 21 April 2023 |
| | | | | US | 2023-0023982 | A1 | 26 January 2023 |
| | | | | WO | 2022-005109 | A1 | 06 January 2022 |

Form PCT/ISA/210 (patent family annex) (July 2022)